# EUROPEAN PATENT APPLICATION

(11) **EP 4 564 469 A1**
(43) Date of publication of application: **04.06.2025**
(21) Application number: 23846143.8
(22) Date of filing: 03.07.2023
(51) Int. Cl.: H01M 4/1397, H01M 4/136, H01M 4/36, H01M 4/58, H01M 4/62

(54) **SLURRY COMPOSITION FOR NONAQUEOUS SECONDARY BATTERY POSITIVE ELECTRODES, POSITIVE ELECTRODE FOR NONAQUEOUS SECONDARY BATTERIES, AND NONAQUEOUS SECONDARY BATTERY**

(30) Priority: 29.07.2022 JP 2022122332
(71) Applicant: Zeon Corporation, Tokyo 100-8246 (JP)
(72) Inventor: MATSUO, Yusaku, Tokyo 100-8246 (JP)
(74) Representative: Maiwald GmbH
(86) International application number: PCT/JP2023/024650
(87) International publication number: WO 2024/024410

(57) **Abstract**

Provided is a slurry composition for a non-aqueous secondary battery positive electrode that has excellent dispersibility and that can cause a positive electrode mixed material layer to display excellent adhesiveness and water shedding ability. The slurry composition for a non-aqueous secondary battery positive electrode contains carbon coating layer-covered olivine-type lithium iron phosphate particles in which surfaces of olivine-type lithium iron phosphate particles are at least partially covered by a carbon coating layer and a polymer X including an acidic group-containing monomer unit in a proportion of not less than 3 mass% and not more than 40 mass%. Surfaces of the carbon coating layer-covered olivine-type lithium iron phosphate particles have a weak acid group content of not less than 5 µmol/g and not more than 15 µmol/g.

## Description

### TECHNICAL FIELD

The present disclosure relates to a slurry composition for a non-aqueous secondary battery positive electrode, a positive electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher secondary battery performance.

An electrode for a secondary battery normally includes an electrode mixed material layer. The electrode mixed material layer is formed, for example, through application and drying, on a current collector, of a composition in the form of a slurry (slurry composition) having an electrode active material, a polymer fulfilling a role as a binding material (binder), and so forth dispersed in a dispersion medium.

Therefore, in recent years, attempts have been made to improve components of slurry compositions used in the formation of electrode mixed material layers in order to achieve further improvement of secondary battery performance (for example, refer to Patent Literature (PTL) 1).

For example, PTL 1 discloses, as a binder, a water-soluble polymer that includes 50 mass% to 95 mass% of structural units derived from an ethylenically unsaturated carboxylic acid ester monomer, that includes 5 mass% to 50 mass% of structural units derived from an ethylenically unsaturated carboxylic acid salt monomer, and that has a weight-average molecular weight of 500,000 or more. Moreover, PTL 1 reports that a positive electrode aqueous composition containing the above-described water-soluble polymer as a binder, a compound having an olivine structure such as lithium iron phosphate as a positive electrode active material, and water as a dispersion medium can be used as a slurry composition for forming a positive electrode for a secondary battery and that this positive electrode aqueous composition improves electrode formability, substrate close adherence, and flexibility without loss of dispersibility or viscosity adjustment functionality.

### CITATION LIST

### Patent Literature

PTL 1: WO2012/008539A1

### SUMMARY

### (Technical Problem)

However, the slurry composition of the conventional technique described above still leaves room for improvement in terms of dispersibility.

There is also room for improvement of the slurry composition of the conventional technique described above in terms of improving adhesiveness of a formed positive electrode mixed material layer and strengthening close adherence between the positive electrode mixed material layer and a current collector and close adherence among components in the positive electrode mixed material layer (for example, among a positive electrode active material).

Furthermore, a battery member such as an electrode that is to be used to form a secondary battery may be dried prior to assembly of the secondary battery from a viewpoint of inhibiting evolution of gas inside a cell of the secondary battery and reducing internal resistance of the secondary battery. Therefore, it is desirable that water can easily be removed from an electrode mixed material layer of an electrode for a secondary battery (i.e., that the electrode mixed material layer has excellent water shedding ability). However, there is also room for improvement of the water shedding ability of a positive electrode mixed material layer that is formed using the slurry composition of the conventional technique described above.

Accordingly, one object of the present disclosure is to provide a slurry composition for a non-aqueous secondary battery positive electrode that has excellent dispersibility and that can cause a positive electrode mixed material layer to display excellent adhesiveness and water shedding ability.

Another object of the present disclosure is to provide a positive electrode for a non-aqueous secondary battery including a positive electrode mixed material layer that can display excellent adhesiveness and water shedding ability.

Yet another object of the present disclosure is to provide a non-aqueous secondary battery that includes this positive electrode for a non-aqueous secondary battery.

### (Solution to Problem)

The inventor conducted diligent investigation with the aim of solving the problems set forth above. The inventor discovered that in the case of a slurry composition for a non-aqueous secondary battery positive electrode that contains carbon coating layer-covered olivine-type lithium iron phosphate particles in which the surfaces of olivine-type lithium iron phosphate particles are at least partially covered by a carbon coating layer and in which the weak acid group content of surfaces is within a specific range, and that also contains a polymer including an acidic group-containing monomer unit in a specific proportion, this slurry composition for a non-aqueous secondary battery positive electrode has excellent dispersibility and can improve adhesiveness and water shedding ability of a positive electrode mixed material layer that is formed using the slurry composition. In this manner, the inventor completed the present disclosure.

Specifically, with the aim of advantageously solving the problems set forth above, [1] a presently disclosed slurry composition for a non-aqueous secondary battery positive electrode comprises: carbon coating layer-covered olivine-type lithium iron phosphate particles in which surfaces of olivine-type lithium iron phosphate particles are at least partially covered by a carbon coating layer; and a polymer X including an acidic group-containing monomer unit in a proportion of not less than 3 mass% and not more than 40 mass%, wherein surfaces of the carbon coating layer-covered olivine-type lithium iron phosphate particles have a weak acid group content of not less than 5 µmol/g and not more than 15 µmol/g.

In the case of a slurry composition for a non-aqueous secondary battery positive electrode that contains carbon coating layer-covered olivine-type lithium iron phosphate particles in which the surfaces of olivine-type lithium iron phosphate particles are at least partially covered by a carbon coating layer and in which the weak acid group content of surfaces is within a specific range, and that also contains a polymer including an acidic group-containing monomer unit in a specific proportion in this manner, this slurry composition for a non-aqueous secondary battery positive electrode has excellent dispersibility, and a positive electrode mixed material layer that is formed using the slurry composition can display excellent adhesiveness and water shedding ability.

Note that the weak acid group content of surfaces of carbon coating layer-covered olivine-type lithium iron phosphate particles that is referred to in the present disclosure can be measured by a method described in the EXAMPLES section of the present specification.

Also note that when a polymer is said to "include a monomer unit" in the present disclosure, this means that "a polymer obtained using that monomer includes a repeating unit derived from the monomer".

Also, the proportional content (mass%) of each monomer unit included in a polymer that is referred to in the present disclosure can be measured by a nuclear magnetic resonance (NMR) method such as ¹H-NMR.

[2] In the slurry composition for a non-aqueous secondary battery positive electrode according to the foregoing [1], the carbon coating layer preferably has a G/D ratio of not less than 0.4 and not more than 0.770.

When the G/D ratio of the carbon coating layer that is included in the carbon coating layer-covered olivine-type lithium iron phosphate particles is within the specific range set forth above, dispersibility of the slurry composition for a non-aqueous secondary battery positive electrode can be further improved, and internal resistance of a non-aqueous secondary battery can be reduced.

Note that the G/D ratio of a carbon coating layer referred to in the present disclosure can be measured by a method described in the EXAMPLES section of the present specification.

[3] In the slurry composition for a non-aqueous secondary battery positive electrode according to the foregoing [1] or [2], the acidic group-containing monomer unit preferably includes either or both of a carboxy group-containing monomer unit and a sulfo group-containing monomer unit.

When the polymer X includes either or both of a carboxy group-containing monomer unit and a sulfo group-containing monomer unit as the acidic group-containing monomer unit, adhesiveness of a positive electrode mixed material layer can be further improved.

[4] In the slurry composition for a non-aqueous secondary battery positive electrode according to any one of the foregoing [1] to [3], the polymer X preferably further includes a hydroxy group-containing acrylic acid ester monomer unit in a proportion of not less than 55 mass% and not more than 90 mass%.

When the polymer X further includes a hydroxy group-containing acrylic acid ester monomer unit in the specific proportion set forth above, adhesiveness of a formed positive electrode mixed material layer can be further improved.

[5] In the slurry composition for a non-aqueous secondary battery positive electrode according to any one of the foregoing [1] to [4], the polymer X preferably has a weight-average molecular weight of not less than 50,000 and less than 500,000.

When the weight-average molecular weight of the polymer X is within the specific range set forth above, dispersibility of the slurry composition for a non-aqueous secondary battery positive electrode and adhesiveness of a positive electrode mixed material layer that is formed using the slurry composition can be further improved.

Note that the weight-average molecular weight of the polymer X can be measured by a method described in the EXAMPLES section of the present specification.

[6] The slurry composition for a non-aqueous secondary battery positive electrode according to any one of the foregoing [1] to [5] preferably further comprises a particulate polymer Y including a hydrophilic group.

When the slurry composition for a non-aqueous secondary battery positive electrode further contains a particulate polymer Y including a hydrophilic group, dispersibility of the slurry composition and adhesiveness of a positive electrode mixed material layer that is formed using the slurry composition can be further improved.

[7] In the slurry composition for a non-aqueous secondary battery positive electrode according to the foregoing [6], content of the particulate polymer Y is preferably not less than 0.5 parts by mass and not more than 5 parts by mass relative to 100 parts by mass of the carbon coating layer-covered olivine-type lithium iron phosphate particles.

When the content of the particulate polymer Y including a hydrophilic group in the slurry composition for a non-aqueous secondary battery positive electrode is within the specific range set forth above, dispersibility of the slurry composition and adhesiveness of a positive electrode mixed material layer that is formed using the slurry composition can be even further improved while also ensuring sufficiently high flexibility of the positive electrode mixed material layer.

[8] The slurry composition for a non-aqueous secondary battery positive electrode according to any one of the foregoing [1] to [7] can further comprise a conductive material including either or both of carbon nanotubes and a particulate conductive material.

Moreover, with the aim of advantageously solving the problems set forth above, [9] a presently disclosed positive electrode for a non-aqueous secondary battery comprises a positive electrode mixed material layer formed using the slurry composition for a non-aqueous secondary battery positive electrode according to any one of the foregoing [1] to [8].

The presently disclosed positive electrode for a non-aqueous secondary battery includes a positive electrode mixed material layer that is formed using any one of the slurry compositions for a non-aqueous secondary battery positive electrode set forth above and that can display excellent adhesiveness and water shedding ability.

Furthermore, with the aim of advantageously solving the problems set forth above, [10] a presently disclosed non-aqueous secondary battery comprises the positive electrode for a non-aqueous secondary battery according to the foregoing [9].

The presently disclosed non-aqueous secondary battery has reduced internal resistance and excellent battery characteristics, for example, as a result of including any one of the positive electrodes for a non-aqueous secondary battery set forth above.

### (Advantageous Effect)

According to the present disclosure, it is possible to provide a slurry composition for a non-aqueous secondary battery positive electrode that has excellent dispersibility and that can cause a positive electrode mixed material layer to display excellent adhesiveness and water shedding ability.

Moreover, according to the present disclosure, it is possible to provide a positive electrode for a non-aqueous secondary battery including a positive electrode mixed material layer that can display excellent adhesiveness and water shedding ability.

Furthermore, according to the present disclosure, it is possible to provide a non-aqueous secondary battery that includes this positive electrode for a non-aqueous secondary battery.

### DETAILED DESCRIPTION

The following provides a detailed description of embodiments of the present disclosure.

The presently disclosed slurry composition for a non-aqueous secondary battery positive electrode (hereinafter, also referred to simply as a "slurry composition") can be used in formation of an electrode mixed material layer that is included in an electrode (electrode for a non-aqueous secondary battery) of a non-aqueous secondary battery such as a lithium ion secondary battery. Moreover, a feature of the presently disclosed non-aqueous secondary battery (hereinafter, also referred to simply as a "secondary battery") is that a positive electrode for a non-aqueous secondary battery (hereinafter, also referred to simply as a "positive electrode") that includes a positive electrode mixed material layer formed from the presently disclosed slurry composition for a non-aqueous secondary battery positive electrode is used therein.

### (Slurry composition for non-aqueous secondary battery electrode)

A feature of the presently disclosed slurry composition is that it contains carbon coating layer-covered olivine-type lithium iron phosphate particles (hereinafter, also referred to simply as "carbon coating layer-covered olivine-type LFP particles") in which surfaces of olivine-type lithium iron phosphate particles (hereinafter, also referred to simply as "olivine-type LFP particles") are at least partially covered by a carbon coating layer and that have a surface weak acid group content within a specific range, and also contains a polymer X in which the proportional content of acidic group-containing monomer units is within a specific range. Moreover, the presently disclosed slurry composition has excellent dispersibility. Consequently, a positive electrode mixed material layer having a uniform structure can be formed by using the presently disclosed slurry composition. Furthermore, the presently disclosed slurry composition can cause a positive electrode mixed material layer that is formed using the slurry composition to display excellent adhesiveness and water shedding ability. As a result of a positive electrode mixed material layer that is formed using the presently disclosed slurry composition having a uniform structure and also having excellent adhesiveness and water shedding ability in this manner, it is possible to reduce internal resistance of a secondary battery that is produced using a positive electrode including the positive electrode mixed material layer.

The presently disclosed slurry composition may further contain a particulate polymer Y and a conductive material in addition to the aforementioned carbon coating layer-covered olivine-type LFP particles and polymer X.

Note that the presently disclosed slurry composition normally further contains a dispersion medium such as water. In other words, the presently disclosed slurry composition is normally a composition in the form of a slurry having components such as the aforementioned carbon coating layer-covered olivine-type LFP particles and polymer X dispersed or dissolved in a dispersion medium such as water.

Moreover, the presently disclosed slurry composition may further contain components other than the aforementioned carbon coating layer-covered olivine-type LFP particles, polymer X, particulate polymer Y, conductive material, and dispersion medium.

### <Carbon coating layer-covered olivine-type LFP particles>

The carbon coating layer-covered olivine-type LFP particles are a material that can function as a positive electrode active material of a secondary battery.

The carbon coating layer-covered olivine-type LFP particles are particles in which surfaces of olivine-type lithium iron phosphate (LiFePO₄) particles are at least partially covered by a carbon coating layer. In the carbon coating layer-covered olivine-type LFP particles, surfaces of the olivine-type LFP particles may be completely covered by the carbon coating layer, or the olivine-type LFP particles may be just partially covered by the carbon coating layer. Moreover, the carbon coating layer that at least partially covers the LFP particles is a layer formed of carbon and may be a layer formed of amorphous carbon, a layer formed of crystalline carbon, or a layer formed of a mixture of amorphous carbon and crystalline carbon, for example, though no specific limitations are made.

The carbon coating layer-covered olivine-type LFP particles can be produced by forming the carbon coating layer with respect to the surfaces of the olivine-type LFP particles.

With regards to the method by which the carbon coating layer is formed, it is possible to appropriately adopt a commonly known method such as a gaseous phase method like CVD (Chemical Vapor Deposition) in which a gaseous phase coating raw material is caused to undergo vapor deposition on the surfaces of olivine-type LFP particles in an inert gas atmosphere; a liquid phase method in which a solution obtained by diluting a coating raw material with an appropriate solvent is mixed with olivine-type LFP particles and then firing and carbonization of the coating raw material are performed in an inert gas atmosphere; or a solid phase method in which olivine-type LFP particles and a coating raw material are kneaded without using a solvent and are then subjected to firing and carbonization in an inert gas atmosphere.

The coating raw material that is used in CVD can be a compound (gas) that can undergo decomposition caused by heat, plasma, or the like to form a carbon coating layer on surfaces of the olivine-type LFP particles. This compound may be any of various types of hydrocarbon compounds inclusive of unsaturated aliphatic hydrocarbons such as ethylene, acetylene, and propylene; saturated aliphatic hydrocarbons such as methane, ethane, and propane; and aromatic hydrocarbons such as benzene, toluene, and naphthalene. Just one of these compounds may be used, or a mixed gas containing two or more of these compounds in a freely selected ratio may be used. Conditions such as temperature, pressure, and time in the CVD can be selected as appropriate depending on the type of coating raw material that is used and the desired coating amount.

The coating raw material in the liquid phase method can be a compound that is soluble in various solvents and that can undergo thermal decomposition to form a carbon coating layer on surfaces of the olivine-type LFP particles. Suitable examples of such compounds include pitch such as coal tar pitch, petroleum pitch, and wood tar pitch. Just one of these compounds can be used individually, or two or more of these compounds can be used in combination in a freely selected ratio. The temperature and time of firing in the liquid phase method can be selected as appropriate depending on the type of coating raw material, for example. The firing in the liquid phase method can be performed at 800°C to 1600°C for 2 hours to 3 hours, for example.

The coating raw material in the solid phase method can be one type or two or more types from among the same materials as for the liquid phase method. The temperature and time of firing in the solid phase method can be selected as appropriate depending on the type of coating raw material, for example, and can be set within the same ranges as for firing in the liquid phase method, for example.

Note that in a situation in which any of the methods described above is adopted as the formation method of the carbon coating layer, various additives (for example, additives that are effective for causing amorphous carbonization of the coating raw material) may be compounded with the coating raw material as necessary.

Also note that a commercially available product can be used as the carbon coating layer-covered olivine-type LFP particles.

### <<Surface weak acid group content>>

The weak acid group content of surfaces of the carbon coating layer-covered olivine-type LFP particles is required to be 5 µmol/g or more, and is preferably 6.5 µmol/g or more, more preferably 8.0 µmol/g or more, and even more preferably 10 µmol/g or more. Moreover, the weak acid group content of surfaces of the carbon coating layer-covered olivine-type LFP particles is required to be 15 µmol/g or less, and is preferably 13.5 µmol/g or less, and more preferably 12.0 µmol/g or less. When the weak acid group content of the surfaces of the carbon coating layer-covered olivine-type LFP particles is not less than any of the lower limits set forth above, dispersibility of the slurry composition can be sufficiently improved, presumably due to increased interactions with the polymer X. On the other hand, when the weak acid group content of the surfaces of the carbon coating layer-covered olivine-type LFP particles is not more than any of the upper limits set forth above, water shedding ability of a formed positive electrode mixed material layer can be sufficiently improved. This enables greater electrode reaction uniformity by inhibiting evolution of gas inside a cell of a secondary battery, and thus can reduce internal resistance of the secondary battery. Moreover, when the weak acid group content of the surfaces of the carbon coating layer-covered olivine-type LFP particles is not more than any of the upper limits set forth above, dispersibility of the slurry composition can be sufficiently improved due to aggregation of these particles being inhibited.

Note that the weak acid group content of the surfaces of the carbon coating layer-covered olivine-type LFP particles can be controlled through the formation method of the carbon coating layer described above, treatment performed after formation of the carbon coating layer, and so forth. For example, the following treatment can be performed in a situation in which the weak acid group content of surfaces of obtained carbon coating layer-covered olivine-type LFP particles is to be adjusted after formation of a carbon coating layer on surfaces of olivine-type LFP particles. Specifically, the weak acid group content of the surfaces of the carbon coating layer-covered olivine-type LFP particles can be reduced by performing firing of the carbon coating layer-covered olivine-type LFP particles at not lower than 600°C and not higher than 800°C in a nitrogen atmosphere. Alternatively, the weak acid group content of the surfaces of the carbon coating layer-covered olivine-type LFP particles can be increased by performing firing of the carbon coating layer-covered olivine-type LFP particles at not lower than 300°C and not higher than 500°C in an oxygen atmosphere.

Note that although no specific limitations are placed on weak acid groups that are present at the surfaces of the carbon coating layer-covered olivine-type LFP particles, one example thereof is a phenolic hydroxy group.

### <<G/D ratio of carbon coating layer>>

A G/D ratio of the carbon coating layer of the carbon coating layer-covered olivine-type LFP particles is preferably 0.4 or more, more preferably 0.60 or more, even more preferably 0.670 or more, and further preferably 0.690 or more, and is preferably 0.770 or less, more preferably 0.740 or less, and even more preferably 0.710 or less. When the G/D ratio of the carbon coating layer of the carbon coating layer-covered olivine-type LFP particles is not less than any of the lower limits set forth above, electron conductivity of the carbon coating layer improves due there being few defects in the carbon coating layer, and thus internal resistance of a secondary battery can be reduced. On the other hand, when the G/D ratio of the carbon coating layer of the carbon coating layer-covered olivine-type LFP particles is not more than any of the upper limits set forth above, dispersibility of the slurry composition can be further improved, presumably due to defects being present in the carbon coating layer to a suitable degree such that hydrophilicity of the carbon coating layer improves and interactions with the polymer X further increase.

### <<Average particle diameter>>

Although the particle diameter of the carbon coating layer-covered olivine-type LFP particles can be adjusted as appropriate without any specific limitations to the extent that the desired effects according to the present disclosure are obtained, the average particle diameter of the carbon coating layer-covered olivine-type LFP particles is preferably not less than 0.1 µm and not more than 5 µm, and particularly preferably not less than 0.5 µm and not more than 2 µm.

Note that the "average particle diameter" of the carbon coating layer-covered olivine-type LFP particles referred to in the present disclosure means the particle diameter D50 at which cumulative volume calculated from a small diameter end in a particle size distribution (by volume) measured using a laser diffraction particle size analyzer produced by Malvern Panalytical reaches 50%.

### <Polymer X>

The polymer X is a component that can function as a dispersant for causing good dispersion of components such as a positive electrode active material and a conductive material in the slurry composition. In addition, the polymer X can function as a binder in a positive electrode mixed material layer that is formed using the slurry composition.

The polymer X includes an acidic group-containing monomer unit in a specific proportion. Besides an acidic group-containing monomer unit, the polymer X can also further include a hydroxy group-containing acrylic acid ester monomer unit. In addition, the polymer X can further include monomer units other than an acidic group-containing monomer unit and a hydroxy group-containing acrylic acid ester monomer unit (hereinafter, also referred to as "other monomer units").

Note that the polymer X is normally a water-soluble polymer, but is not specifically limited thereto. Also note that when a polymer is said to be "water-soluble" in the present disclosure, this means that when 0.5 g of the polymer (in terms of solid content) is dissolved in 100 g of water at a temperature of 25°C, insoluble content is less than 5.0 mass%.

### <<Acidic group-containing monomer unit>>

Examples of acidic group-containing monomers that can form an acidic group-containing monomer unit in the polymer X include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Note that a hydrogen atom in a carboxy group of a carboxy group-containing monomer such as described above may have been substituted by an inorganic ion or an organic ion such that the monomer is in the form of an inorganic salt or an organic salt. In other words, the carboxy group-containing monomer may be in the form of a carboxylate salt.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that a hydrogen atom in a sulfo group of a sulfo group-containing monomer such as described above may have been substituted by an inorganic ion or an organic ion such that the monomer is in the form of an inorganic salt or an organic salt. In other words, the sulfo group-containing monomer may be in the form of a sulfonate salt.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that a hydrogen atom in a phosphate group of a phosphate group-containing monomer such as described above may have been substituted by an inorganic ion or an organic ion such that the monomer is in the form of an inorganic salt or an organic salt. In other words, the phosphate group-containing monomer may be in the form of a phosphate salt.

Note that one of these acidic group-containing monomers may be used individually, or two or more of these acidic group-containing monomers may be used in a freely selected ratio.

Moreover, from a viewpoint of further improving adhesiveness of a formed positive electrode mixed material layer, it is preferable to use a carboxy group-containing monomer or a sulfo group-containing monomer as an acidic group-containing monomer.

The proportional content of acidic group-containing monomer units in the polymer X when all monomer units included in the polymer X are taken to be 100 mass% is required to be 3 mass% or more, and is preferably 4 mass% or more, more preferably 4.5 mass% or more, even more preferably 5 mass% or more, further preferably 6 mass% or more, and even further preferably 8 mass% or more. Moreover, the proportional content of acidic group-containing monomer units in the polymer X when all monomer units included in the polymer X are taken to be 100 mass% is required to be 40 mass% or less, and is preferably 35 mass% or less, and more preferably 30 mass% or less. When the proportional content of acidic group-containing monomer units in the polymer X is 3 mass% or more, dispersibility of the slurry composition can be sufficiently improved, presumably due to increased interactions with the carbon coating layer-covered olivine-type LFP particles. Moreover, when the proportional content of acidic group-containing monomer units in the polymer X is 3 mass% or more, adhesiveness of a formed positive electrode mixed material layer can be sufficiently improved. Furthermore, when the proportional content of acidic group-containing monomer units in the polymer X is 3 mass% or more, water shedding ability of a formed positive electrode mixed material layer can be sufficiently improved, presumably due to increased interactions with the carbon coating layer-covered olivine-type LFP particles. On the other hand, when the proportional content of acidic group-containing monomer units in the polymer X is 40 mass% or less, sufficiently high flexibility of a formed positive electrode mixed material layer can be ensured, and adhesiveness of the positive electrode mixed material layer can be sufficiently improved, presumably due to increased flexibility of the polymer X.

### <<Hydroxy group-containing acrylic acid ester monomer unit>>

Examples of hydroxy group-containing acrylic acid ester monomers that can form a hydroxy group-containing acrylic acid ester monomer unit in the polymer X include alkanol esters of acrylic acid (also referred to as "acrylic acid hydroxyalkyl ester monomers") such as 2-hydroxyethyl acrylate, 2-hydroxypropyl acrylate, and 4-hydroxybutyl acrylate; and esters of acrylic acid and polyalkylene glycol (also referred to as "acrylic acid polyalkylene glycol ester monomers") represented by a general formula: CH₂=CH-COO-(C_{q}H_{2q}O)ₚ-H (where p indicates an integer of 2 to 9 and q indicates an integer of 2 to 4). Note that one of these hydroxy group-containing acrylic acid ester monomers may be used individually, or two or more of these hydroxy group-containing acrylic acid ester monomers may be used in a freely selected ratio.

Of these examples, it is preferable to use an alkanol ester of acrylic acid (acrylic acid hydroxyalkyl ester monomer) such as 2-hydroxyethyl acrylate, 2-hydroxypropyl acrylate, or 4-hydroxybutyl acrylate as a hydroxy group-containing acrylic acid ester monomer from a viewpoint of further improving adhesiveness of a positive electrode mixed material layer.

The proportional content of hydroxy group-containing acrylic acid ester monomer units in the polymer X when all monomer units included in the polymer X are taken to be 100 mass% is preferably 55 mass% or more, more preferably 57.5 mass% or more, even more preferably 60 mass% or more, and further preferably 70 mass% or more, and is preferably 90 mass% or less, more preferably 85 mass% or less, and even more preferably 80 mass% or less. When the proportional content of hydroxy group-containing acrylic acid ester monomer units in the polymer X is not less than any of the lower limits set forth above, sufficiently high flexibility of a formed positive electrode mixed material layer can be ensured, and adhesiveness of the positive electrode mixed material layer can be further improved, presumably due to increased flexibility of the polymer X. On the other hand, when the proportional content of hydroxy group-containing acrylic acid ester monomer units in the polymer X is not more than any of the upper limits set forth above, sufficiently high adhesiveness of a formed positive electrode mixed material layer can be ensured, presumably due to flexibility of the polymer X being restricted from increasing excessively.

### <<Other monomer units>>

The polymer X may further include other monomer units.

Although no specific limitations are placed on other monomer units in the polymer X so long as the desired effects according to the present disclosure are obtained, a hydroxy group-containing methacrylic acid ester monomer unit, an unsaturated carboxylic acid amide monomer unit, a nitrile group-containing monomer unit, and the like are preferable, for example.

### [Hydroxy group-containing methacrylic acid ester monomer unit]

Examples of hydroxy group-containing methacrylic acid ester monomers that can form a hydroxy group-containing methacrylic acid ester monomer unit in the polymer X include alkanol esters of methacrylic acid (also referred to as "methacrylic acid hydroxyalkyl ester monomers") such as 2-hydroxyethyl methacrylate and 2-hydroxypropyl methacrylate; and esters of methacrylic acid and polyalkylene glycol (also referred to as "methacrylic acid polyalkylene glycol ester monomers") represented by a general formula: CH₂=C(CH₃)-COO-(CₛH₂ₛO)ᵣ-H (where r indicates an integer of 2 to 9 and s indicates an integer of 2 to 4). Note that one of these hydroxy group-containing methacrylic acid ester monomers may be used individually, or two or more of these hydroxy group-containing methacrylic acid ester monomers may be used in a freely selected ratio.

Of these examples, it is preferable to use an alkanol ester of methacrylic acid (methacrylic acid hydroxyalkyl ester monomer) such as 2-hydroxyethyl methacrylate or 2-hydroxypropyl methacrylate as a hydroxy group-containing methacrylic acid ester monomer from a viewpoint of further improving adhesiveness of a positive electrode mixed material layer.

The proportional content of hydroxy group-containing methacrylic acid ester monomer units in the polymer X when all monomer units included in the polymer X are taken to be 100 mass% is preferably 5 mass% or more, more preferably 7.5 mass% or more, and even more preferably 10 mass% or more, and is preferably 30 mass% or less, more preferably 27.5 mass% or less, and even more preferably 25 mass% or less. When the proportional content of hydroxy group-containing methacrylic acid ester monomer units in the polymer X is within any of the specific ranges set forth above, flexibility of a formed positive electrode mixed material layer can be increased, and adhesiveness of the positive electrode mixed material layer can be further improved.

The total proportional content of hydroxy group-containing acrylic acid ester monomer units and hydroxy group-containing methacrylic acid ester monomer units in the polymer X when all monomer units included in the polymer X are taken to be 100 mass% is preferably 60 mass% or more, more preferably 70 mass% or more, and even more preferably 80 mass% or more, and is preferably 97 mass% or less, more preferably 95.5 mass% or less, and even more preferably 94 mass% or less. When the total proportional content of hydroxy group-containing acrylic acid ester monomer units and hydroxy group-containing methacrylic acid ester monomer units in the polymer X is not less than any of the lower limits set forth above, flexibility of a formed positive electrode mixed material layer can be increased, and adhesiveness of the positive electrode mixed material layer can be further improved. On the other hand, when the total proportional content of hydroxy group-containing acrylic acid ester monomer units and hydroxy group-containing methacrylic acid ester monomer units in the polymer X is not more than any of the upper limits set forth above, sufficiently high dispersibility of the slurry composition and adhesiveness of a formed positive electrode mixed material layer can be ensured because a sufficiently high proportional content of acidic group-containing monomer units such as previously described can be ensured.

### [Unsaturated carboxylic acid amide monomer unit]

Examples of unsaturated carboxylic acid amide monomers that can form an unsaturated carboxylic acid amide monomer unit include compounds having a chemical structure resulting from an unsaturated carboxylic acid such as (meth)acrylic acid undergoing dehydration condensation with ammonia, a primary amine, or a secondary amine. Specific examples of unsaturated carboxylic acid amide monomers include acrylamide, methacrylamide, N,N-dimethylacrylamide, N,N-dimethylmethacrylamide, N-isopropylacrylamide, and N-isobutylacrylamide. One of these unsaturated carboxylic acid amide monomers may be used individually, or two or more of these unsaturated carboxylic acid amide monomers may be used in a freely selected ratio. In particular, from a viewpoint of increasing interactions between molecules through hydrogen bonds in the polymer X and further improving adhesiveness of a formed positive electrode mixed material layer, it is preferable to use acrylamide or methacrylamide, and more preferable to use acrylamide.

The proportional content of unsaturated carboxylic acid amide monomer units in the polymer X when all monomer units included in the polymer X are taken to be 100 mass% can be set as 0 mass% or more, and is preferably 1 mass% or more, preferably 2 mass% or more, and preferably 20 mass% or less.

Moreover, the proportional content of unsaturated carboxylic acid amide monomer units in the polymer X when all monomer units included in the polymer X are taken to be 100 mass% may be 10 mass% or less, or may be 5 mass% or less.

It may of course alternatively be the case that the polymer X does not include an unsaturated carboxylic acid amide monomer unit.

### [Nitrile group-containing monomer unit]

Examples of nitrile group-containing monomers that can form a nitrile group-containing monomer unit include α,β-ethylenically unsaturated nitrile monomers. No specific limitations are placed on α,β-ethylenically unsaturated nitrile monomers that can be used other than being an α,β-ethylenically unsaturated compound that contains a nitrile group. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these examples, acrylonitrile and methacrylonitrile are preferable, and acrylonitrile is more preferable as a nitrile group-containing monomer.

One of these nitrile group-containing monomers may be used individually, or two or more of these nitrile group-containing monomers may be used in a freely selected ratio.

The proportional content of nitrile group-containing monomer units in the polymer X when all monomer units included in the polymer X are taken to be 100 mass% can be set as 0 mass% or more, and is preferably 1 mass% or more, preferably 2 mass% or more, preferably 10 mass% or less, and preferably 5 mass% or less.

Moreover, the proportional content of nitrile group-containing monomer units in the polymer X when all monomer units included in the polymer X are taken to be 100 mass% may be 2 mass% or less, or may be 1 mass% or less.

It may of course alternatively be the case that the polymer X does not include a nitrile group-containing monomer unit.

### <<Production method of polymer X>>

The polymer X can, for example, be produced as described below, but is not specifically limited to being produced in this manner.

An acidic group-containing monomer, a hydroxy group-containing acrylic acid ester monomer, and other monomers such as described above are mixed in a solvent such as water. A polymerization accelerator is added to the resultant mixture. Thereafter, a polymerization initiator is added so as to initiate a polymerization reaction. Cycles of supplemental addition of a polymerization accelerator, supplemental addition of a polymerization initiator, and polymerization may subsequently be performed once, twice, or more, as necessary. The polymerization temperature when the polymerization initiator is added to initiate the polymerization reaction is preferably not lower than 35°C and not higher than 65°C, and more preferably not lower than 40°C and not higher than 55°C, for example. Moreover, the polymerization reaction time between addition of the polymerization initiator and addition of the polymerization accelerator is preferably not less than 5 minutes and not more than 40 minutes, and more preferably not less than 10 minutes and not more than 30 minutes, for example. The operations described above are preferably performed in a nitrogen atmosphere. Also, a chain transfer agent may be used as a polymerization aid in the polymerization reaction. After the polymerization reaction, a reaction inhibitor is used to end the polymerization reaction. Next, the product is cooled, is placed in an air atmosphere, and is subsequently adjusted to a pH of not lower than 7.0 and not higher than 9.0 through addition of lithium hydroxide aqueous solution or the like.

A known polymerization initiator can be used as the polymerization initiator without any specific limitations. The polymerization initiator may be potassium persulfate, sodium persulfate, ammonium persulfate, or the like, for example. Of these polymerization initiators, potassium persulfate is preferable. In a case in which a plurality of additions of a polymerization initiator are made, the added polymerization initiator may be the same or different in each addition.

Note that the amount of the polymerization initiator that is used can be adjusted as appropriate to the extent that the desired effects according to the present disclosure are obtained.

The polymerization accelerator may be L-ascorbic acid, sodium hydrogen sulfite, or the like, for example. In a case in which a plurality of additions of a polymerization accelerator are made, the added polymerization accelerator may be the same or different in each addition. In particular, it is preferable that L-ascorbic acid as a polymerization accelerator is present in the polymerization system at the start of the polymerization reaction.

Note that the amount of the polymerization accelerator that is used can be adjusted as appropriate to the extent that the desired effects according to the present disclosure are obtained.

### <<Weight-average molecular weight (Mw)>>

The weight-average molecular weight (Mw) of the polymer X is preferably 50,000 or more, more preferably 75,000 or more, even more preferably 100,000 or more, and further preferably 150,000 or more, and is preferably less than 500,000, more preferably less than 400,000, and even more preferably less than 300,000. Adhesiveness of a formed positive electrode mixed material layer can be further improved when the weight-average molecular weight (Mw) of the polymer X is not less than any of the lower limits set forth above, whereas dispersibility of the slurry composition can be further improved when the weight-average molecular weight (Mw) of the polymer X is less than any of the upper limits set forth above.

Note that the weight-average molecular weight (Mw) of the polymer X can be controlled through polymerization conditions in the production method of the polymer X described above. Specifically, the weight-average molecular weight (Mw) of the polymer X can be controlled through the type and additive amount of a polymerization initiator, a polymerization accelerator, a chain transfer agent, or the like, the time and temperature of the polymerization reaction, and so forth.

### <<Molecular weight distribution (Mw/Mn)>>

The molecular weight distribution (Mw/Mn) of the polymer X is preferably 1.5 or more, more preferably 1.8 or more, even more preferably 2.2 or more, and further preferably 3 or more, and is preferably 10 or less, more preferably 7 or less, and even more preferably 4 or less.

Note that the molecular weight distribution (Mw/Mn) of the polymer X can be controlled through polymerization conditions in the production method of the polymer X described above. Specifically, the molecular weight distribution (Mw/Mn) of the polymer X can be controlled through the type and additive amount of a polymerization initiator, a polymerization accelerator, a chain transfer agent, or the like, the time and temperature of the polymerization reaction, and so forth.

### <<Content in slurry composition>>

Although the content of the polymer X in the slurry composition can be adjusted as appropriate to the extent that the desired effects according to the present disclosure are obtained, the content of the polymer X is preferably not less than 0.1 parts by mass and not more than 5 parts by mass relative to 100 parts by mass of the carbon coating layer-covered olivine-type LFP particles, for example. When the content of the polymer X in the slurry composition is not less than the lower limit set forth above, dispersibility of the slurry composition and adhesiveness of a formed positive electrode mixed material layer can be further improved. On the other hand, when the content of the polymer X in the slurry composition is not more than the upper limit set forth above, internal resistance of a secondary battery can be reduced.

### <Particulate polymer Y>

The particulate polymer Y is a component that can function as a binder in a positive electrode mixed material layer in conjunction with the polymer X described above.

Note that the particulate polymer Y is considered to be a different polymer to the polymer X described above.

Moreover, the particulate polymer Y preferably includes a hydrophilic group. By using a particulate polymer including a hydrophilic group as the particulate polymer Y, it is possible to further improve dispersibility of the slurry composition and adhesiveness of a formed positive electrode mixed material layer.

No specific limitations are placed on the method by which a hydrophilic group is introduced into the particulate polymer Y. For example, a method in which a hydrophilic group-containing monomer is used in polymerization of the particulate polymer Y so as to form a hydrophilic group-containing monomer unit in the obtained particulate polymer Y can be adopted.

### <<Hydrophilic group-containing monomer unit>>

Examples of hydrophilic group-containing monomers that can form a hydrophilic group-containing monomer unit in the particulate polymer Y include hydroxy group-containing monomers and acidic group-containing monomers such as carboxy group-containing monomers, sulfo group-containing monomers, and phosphate group-containing monomers.

The various acidic group-containing monomers that can be used in production of the previously described polymer X can be used as acidic group-containing monomers (carboxy group-containing monomers, sulfo group-containing monomers, phosphate group-containing monomers, etc.).

Examples of hydroxy group-containing monomers include alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In the present disclosure, "(meth)allyl" is used to indicate "allyl" and/or "methallyl", and "(meth)acryloyl" is used to indicate "acryloyl" and/or "methacryloyl".

One of the hydrophilic group-containing monomers described above may be used individually, or two or more of the hydrophilic group-containing monomers described above may be used in combination in a freely selected ratio.

Moreover, it is preferable to use an acidic group-containing monomer (carboxy group-containing monomer, sulfo group-containing monomer, phosphate group-containing monomer, etc.) as a hydrophilic group-containing monomer from a viewpoint of even further improving dispersibility of the slurry composition and adhesiveness of a formed positive electrode mixed material layer, it is more preferable to use an acidic group-containing monomer and a hydroxy group-containing monomer in combination as hydrophilic group-containing monomers from a viewpoint of yet further improving adhesiveness of a formed positive electrode mixed material layer, and it is even more preferable to use a carboxy group-containing monomer and a hydroxy group-containing monomer in combination as hydrophilic group-containing monomers.

### -Proportional content-

The proportional content of hydrophilic group-containing monomer units in the particulate polymer Y when all monomer units included in the particulate polymer Y are taken to be 100 mass% is preferably not less than 1 mass% and not more than 10 mass%. When the proportional content of hydrophilic group-containing monomer units in the particulate polymer Y is within the specific range set forth above, dispersibility of the slurry composition and adhesiveness of a formed positive electrode mixed material layer can be even further improved.

Moreover, in a case in which the particulate polymer Y includes both an acidic group-containing monomer unit (carboxy group-containing monomer unit, sulfo group-containing monomer unit, phosphate group-containing monomer unit, etc.) and a hydroxy group-containing monomer unit as hydrophilic group-containing monomer units, the proportional content of hydrophilic group-containing monomer units (i.e., the total proportional content of acidic group-containing monomer units and hydroxy group-containing monomer units) in the particulate polymer Y when all monomer units included in the particulate polymer Y are taken to be 100 mass% is more preferably 2 mass% or more, and even more preferably 3 mass% or more, and is more preferably 5 mass% or less, and even more preferably 4 mass% or less. When the total proportional content of acidic group-containing monomer units and hydroxy group-containing monomer units in the particulate polymer Y is within any of the specific ranges set forth above, dispersibility of the slurry composition and adhesiveness of a formed positive electrode mixed material layer can be yet further improved.

Note that in a case in which the particulate polymer Y includes an acidic group-containing monomer unit (carboxy group-containing monomer unit, sulfo group-containing monomer unit, phosphate group-containing monomer unit, etc.) as a hydrophilic group-containing monomer unit, the proportional content of acidic group-containing monomer units in the particulate polymer Y when all monomer units included in the particulate polymer Y are taken to be 100 mass% is preferably 0.5 mass% or more, more preferably 1 mass% or more, and even more preferably 1.5 mass% or more, and is preferably 5 mass% or less, more preferably 3 mass% or less, and even more preferably 2.5 mass% or less. When the proportional content of acidic group-containing monomer units in the particulate polymer Y is not less than any of the lower limits set forth above, dispersibility of the slurry composition and adhesiveness of a formed positive electrode mixed material layer can be even further improved. On the other hand, when the proportional content of acidic group-containing monomer units in the particulate polymer Y is not more than any of the upper limits set forth above, sufficiently high flexibility of a formed positive electrode mixed material layer can be ensured.

Moreover, in a case in which the particulate polymer Y includes a hydroxy group-containing monomer unit as a hydrophilic group-containing monomer unit, the proportional content of hydroxy group-containing monomer units in the particulate polymer Y when all monomer units included in the particulate polymer Y are taken to be 100 mass% is preferably 0.5 mass% or more, and more preferably 1 mass% or more, and is preferably 5 mass% or less, more preferably 2 mass% or less, and even more preferably 1.5 mass% or less. When the proportional content of hydroxy group-containing monomer units in the particulate polymer Y is not less than any of the lower limits set forth above, flexibility of a formed positive electrode mixed material layer can be improved. On the other hand, when the proportional content of hydroxy group-containing monomer units in the particulate polymer Y is not more than any of the upper limits set forth above, sufficiently high dispersibility of the slurry composition and adhesiveness of a formed positive electrode mixed material layer can be ensured.

### <<Type of particulate polymer Y>>

The particulate polymer Y including a hydrophilic group is preferably a hydrophilic group-containing acrylic polymer or a hydrophilic group-containing conjugated diene polymer, for example, and is more preferably a hydrophilic group-containing acrylic polymer from a viewpoint of ensuring sufficiently high cycle characteristics of a secondary battery.

### -Hydrophilic group-containing acrylic polymer-

The hydrophilic group-containing acrylic polymer is a copolymer that includes at least a (meth)acrylic acid ester monomer unit in addition to a hydrophilic group-containing monomer unit such as described above. Note that the hydrophilic group-containing acrylic polymer preferably further includes a nitrile group-containing monomer unit. Moreover, the hydrophilic group-containing acrylic polymer may further include monomer units other than a hydrophilic group-containing monomer unit, a (meth)acrylic acid ester monomer unit, and a nitrile group-containing monomer unit.

Note that the proportional content of hydrophilic group-containing monomer units in the hydrophilic group-containing acrylic polymer can be set within any of the same ranges as the preferable ranges for the proportional content of hydrophilic group-containing monomer units in the polymer described above.

Examples of (meth)acrylic acid ester monomers that can form a (meth)acrylic acid ester monomer unit in the hydrophilic group-containing acrylic polymer include (meth)acrylic acid alkyl esters such as methyl acrylate, ethyl acrylate, butyl acrylate, methyl methacrylate, ethyl methacrylate, and 2-ethylhexyl acrylate. Note that one of these (meth)acrylic acid ester monomers may be used individually, or two or more of these (meth)acrylic acid ester monomers may be used in a freely selected ratio.

In the present specification, "(meth)acryl" is used to indicate "acryl" and/or "methacryl".

The proportional content of (meth)acrylic acid ester monomer units in the hydrophilic group-containing acrylic polymer when all monomer units included in the hydrophilic group-containing acrylic polymer are taken to be 100 mass% is preferably 50 mass% or more, more preferably 60 mass% or more, and even more preferably 70 mass% or more, and is preferably 90 mass% or less, more preferably 85 mass% or less, and even more preferably 80 mass% or less. When the proportional content of (meth)acrylic acid ester monomer units in the hydrophilic group-containing acrylic polymer is within any of the specific ranges set forth above, adhesiveness of a formed positive electrode mixed material layer can be even further improved.

Examples of nitrile group-containing monomers that can form a nitrile group-containing monomer unit in the hydrophilic group-containing acrylic polymer include the nitrile group-containing monomers that can be used in formation of the previously described polymer X.

The proportional content of nitrile group-containing monomer units in the hydrophilic group-containing acrylic polymer when all monomer units included in the hydrophilic group-containing acrylic polymer are taken to be 100 mass% is preferably 5 mass% or more, more preferably 10 mass% or more, and even more preferably 17 mass% or more, and is preferably 40 mass% or less, more preferably 35 mass% or less, and even more preferably 26 mass% or less. When the proportional content of nitrile group-containing monomer units in the hydrophilic group-containing acrylic polymer is within any of the specific ranges set forth above, adhesiveness of a formed positive electrode mixed material layer can be even further improved.

### -Hydrophilic group-containing conjugated diene polymer-

The hydrophilic group-containing conjugated diene polymer is a copolymer that includes a conjugated diene monomer unit in addition to a hydrophilic group-containing monomer unit such as described above.

Specific examples of the conjugated diene polymer include, but are not specifically limited to, copolymers that include a hydrophilic group-containing monomer unit, an aromatic vinyl monomer unit, and an aliphatic conjugated diene monomer unit such as a hydrophilic group-containing styrene-butadiene copolymer (hydrophilic group-containing SBR); hydrophilic group-containing butadiene rubber (hydrophilic group-containing BR), which is a copolymer including a hydrophilic group-containing monomer unit and a butadiene unit; hydrophilic group-containing acrylic rubber (hydrophilic group-containing NBR), which is a copolymer including a hydrophilic group-containing monomer unit, an acrylonitrile unit, and a butadiene unit; and hydrogenated products of the preceding examples. One of these conjugated diene polymers may be used individually, or two or more of these conjugated diene polymers may be used in a freely selected ratio.

Of these conjugated diene polymers, it is preferable to use a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR) from a viewpoint of even further improving adhesiveness of a formed electrode mixed material layer.

The proportional content of hydrophilic group-containing monomer units in the hydrophilic group-containing conjugated diene polymer can be set within any of the same ranges as the preferable ranges for the proportional content of hydrophilic group-containing monomer units in the polymer described above.

Examples of conjugated diene monomers that can form a conjugated diene monomer unit in the hydrophilic group-containing conjugated diene polymer include conjugated diene compounds such as 1,3-butadiene, isoprene, 2,3-dimethyl-1,3-butadiene, and 1,3-pentadiene. One of these conjugated diene monomers may be used individually, or two or more of these conjugated diene monomers may be used in a freely selected ratio. Of these conjugated diene monomers, 1,3-butadiene is preferable.

The proportional content of conjugated diene monomer units in the hydrophilic group-containing conjugated diene polymer when all monomer units included in the hydrophilic group-containing conjugated diene polymer are taken to be 100 mass% is preferably 15 mass% or more, more preferably 20 mass% or more, and even more preferably 25 mass% or more, and is preferably 60 mass% or less, more preferably 50 mass% or less, and even more preferably 40 mass% or less. When the proportional content of conjugated diene monomer units in the hydrophilic group-containing conjugated diene polymer is within any of the specific ranges set forth above, adhesiveness of a formed positive electrode mixed material layer can be yet further improved.

Examples of aromatic vinyl monomers that can form an aromatic vinyl monomer unit in the hydrophilic group-containing conjugated diene polymer include styrene, α-methylstyrene, vinyltoluene, and divinylbenzene. One of these aromatic vinyl monomers may be used individually, or two or more of these aromatic vinyl monomers may be used in a freely selected ratio. Of these aromatic vinyl monomers, styrene is preferable.

The proportional content of aromatic vinyl monomer units in the hydrophilic group-containing conjugated diene polymer when all monomer units included in the hydrophilic group-containing conjugated diene polymer are taken to be 100 mass% is preferably 30 mass% or more, more preferably 45 mass% or more, and even more preferably 56 mass% or more, and is preferably 80 mass% or less, more preferably 75 mass% or less, and even more preferably 71 mass% or less. When the proportional content of aromatic vinyl monomer units in the hydrophilic group-containing conjugated diene polymer is within any of the specific ranges set forth above, adhesiveness of a formed positive electrode mixed material layer can be yet further improved.

### <<Production method of particulate polymer Y>>

The method of polymerization of the particulate polymer Y may be any of solution polymerization, suspension polymerization, bulk polymerization, emulsion polymerization, or the like, for example, without any specific limitations. Moreover, addition polymerization such as ionic polymerization, radical polymerization, or living radical polymerization can be adopted as the polymerization reaction. The polymerization may be carried out with a commonly used emulsifier, dispersant, polymerization initiator, chain transfer agent, or the like, and the amount thereof may also be the same as commonly used.

### <<Content in slurry composition>>

Although the proportional content of the particulate polymer Y in the slurry composition can be adjusted as appropriate to the extent that the desired effects according to the present disclosure are obtained, the proportional content of the particulate polymer Y is preferably 0.5 parts by mass or more, and more preferably 0.8 parts by mass or more relative to 100 parts by mass of the carbon coating layer-covered olivine-type LFP particles, and is preferably 5 parts by mass or less, and more preferably 3 parts by mass or less relative to 100 parts by mass of the carbon coating layer-covered olivine-type LFP particles, for example. When the content of the particulate polymer Y in the slurry composition is not less than any of the lower limits set forth above, dispersibility of the slurry composition and adhesiveness of a formed positive electrode mixed material layer can be even further improved. On the other hand, when the content of the particulate polymer X in the slurry composition is not more than any of the upper limits set forth above, sufficiently high flexibility of a formed positive electrode mixed material layer can be ensured.

### <Conductive material>

The conductive material is a component having a function of ensuring electrical contact among a positive electrode active material (carbon coating layer-covered olivine-type LFP particles) in a positive electrode mixed material layer.

Either or both of carbon nanotubes and a particulate conductive material can be used as the conductive material, for example, with the use of at least carbon nanotubes being preferable, and the combined use of carbon nanotubes and a particulate conductive material more preferable.

By using at least carbon nanotubes as the conductive material, it is possible to reduce internal resistance of a secondary battery. Moreover, by using carbon nanotubes and a particulate conductive material in combination as the conductive material, it is possible to reduce internal resistance of a secondary battery while also improving flexibility of a positive electrode mixed material layer.

Note that conductive materials other than carbon nanotubes and a particulate conductive material (i.e., other conductive materials) may be used as the conductive material. For example, a fibrous conductive material other than carbon nanotubes can be used as another conductive material.

### <<Carbon nanotubes>>

Carbon nanotubes can reduce internal resistance of a secondary battery by forming electrical conduction paths in a positive electrode mixed material layer. The use of carbon nanotubes also enables improvement of cycle characteristics and low-temperature characteristics of a secondary battery.

The carbon nanotubes are not specifically limited so long as they are carbon nanotubes (hereinafter, also abbreviated as "CNTs") that yield the desired effects according to the present disclosure. Carbon nanotubes may be single-walled (SW) carbon nanotubes or multi-walled (MW) carbon nanotubes depending on the type of wall format. Moreover, the carbon nanotubes that can be used as the conductive material may be single-walled carbon nanotubes, multi-walled carbon nanotubes, or a combination thereof.

The average number of walls of the CNTs is preferably 10 or less, more preferably 9 or less, even more preferably 8 or less, further preferably 2 or less, and even further preferably 1.5 or less. When the average number of walls of the CNTs is not more than any of the upper limits set forth above, cycle characteristics of a secondary battery can be further improved.

Note that the lower limit for the average number of walls of the CNTs is not specifically limited but is normally 1 or more.

The average diameter of the CNTs is preferably 0.5 nm or more, more preferably 1 nm or more, even more preferably 1.5 nm or more, further preferably 2 nm or more, and even further preferably 2.5 nm or more, and is preferably 20 nm or less, more preferably 12 nm or less, even more preferably 8 nm or less, further preferably 6 nm or less, and even further preferably 4 nm or less. When the average diameter of the CNTs is not less than any of the lower limits set forth above, aggregation of the CNTs can be sufficiently inhibited, and dispersibility of the CNTs as the conductive material can be sufficiently ensured. On the other hand, when the average diameter of the CNTs is not more than any of the upper limits set forth above, good electrical conduction paths can be formed in a positive electrode mixed material layer, internal resistance of a secondary battery can be further reduced, and cycle characteristics of the secondary battery can be further improved.

A ratio (G/D ratio) of G band peak intensity relative to D band peak intensity in a Raman spectrum of the CNTs is preferably 0.6 or more, more preferably 1.2 or more, even more preferably 2.1 or more, further preferably 3.0 or more, and even further preferably 3.6 or more. When the G/D ratio of the CNTs is not less than any of the lower limits set forth above, cycle characteristics of a secondary battery can be further improved. Note that the upper limit for the G/D ratio of the CNTs is not specifically limited and may be 200 or less, for example.

The BET specific surface area of the CNTs is preferably 100 m²/g or more, more preferably 200 m²/g or more, and even more preferably 250 m²/g or more, and is preferably 1,200 m²/g or less, more preferably 1,100 m²/g or less, and even more preferably 1,000 m²/g or less. When the BET specific surface area of the CNTs is within any of the specific ranges set forth above, internal resistance of a secondary battery can be further reduced.

Note that the "BET specific surface area" of the CNTs referred to in the present disclosure is the nitrogen adsorption specific surface area measured by the BET method.

### [Production method of carbon nanotubes]

CNTs having the properties set forth above can be produced by a known method such as an arc discharge method, a laser ablation method, or a super growth method without any specific limitations.

### [Content in slurry composition]

Although the content of the CNTs in the slurry composition can be adjusted as appropriate to the extent that the desired effects according to the present disclosure are obtained, the content of the CNTs is preferably 0.01 parts by mass or more, more preferably 0.05 parts by mass or more, and even more preferably 0.1 parts by mass or more relative to 100 parts by mass of the carbon coating layer-covered olivine-type LFP particles, and is preferably 2.5 parts by mass or less, more preferably 1.5 parts by mass or less, and even more preferably 1.0 parts by mass or less relative to 100 parts by mass of the carbon coating layer-covered olivine-type LFP particles, for example. When the content of the CNTs in the slurry composition is not less than any of the lower limits set forth above, internal resistance of a secondary battery can be further reduced. On the other hand, when the content of the CNTs in the slurry composition is not more than any of the upper limits set forth above, sufficiently high flexibility of a formed positive electrode mixed material layer can be ensured.

### <<Particulate conductive material>>

The particulate conductive material is a component that can function as a conductive material in a positive electrode mixed material layer and that can improve flexibility of the electrode mixed material layer.

The particulate conductive material is not specifically limited so long as it is a conductive material having a form other than a fibrous form (for example, having a spherical or plate-like form) and may be carbon black (for example, acetylene black, Ketjenblack^{®} (Ketjenblack is a registered trademark in Japan, other countries, or both), or furnace black), graphene, or the like. Note that one of these particulate conductive materials may be used individually, or two or more of these particulate conductive materials may be used in combination in a freely selected ratio.

### [Content in slurry composition]

Although the content of the particulate conductive material in the slurry composition can be adjusted as appropriate to the extent that the desired effects according to the present disclosure are obtained, the content of the particulate conductive material is preferably 0.1 parts by mass or more, more preferably 0.5 parts by mass or more, and even more preferably 1 part by mass or more relative to 100 parts by mass of the carbon coating layer-covered olivine-type LFP particles, and is preferably 5 parts by mass or less, more preferably 3 parts by mass or less, and even more preferably 2 parts by mass or less relative to 100 parts by mass of the carbon coating layer-covered olivine-type LFP particles, for example. When the content of the particulate conductive material in the slurry composition is not less than any of the lower limits set forth above, flexibility of a formed positive electrode mixed material layer can be further improved. On the other hand, when the content of the particulate conductive material in the slurry composition is not more than any of the upper limits set forth above, sufficiently high adhesiveness of a formed positive electrode mixed material layer can be ensured.

### <<Mixing ratio of CNTs and particulate conductive material>>

Although no specific limitations are placed on the mixing ratio of the CNTs and the particulate conductive material, the proportion constituted by the content of the CNTs among the total content of the CNTs and the particulate conductive material in the slurry composition is preferably 1 mass% or more, more preferably 2 mass% or more, and even more preferably 3 mass% or more, and is preferably 30 mass% or less, more preferably 20 mass% or less, and even more preferably 10 mass% or less, for example. When the proportion constituted by the content of the CNTs among the total content of the CNTs and the particulate conductive material is not less than any of the lower limits set forth above, internal resistance of a secondary battery can be further reduced. On the other hand, when the proportion constituted by the content of the CNTs among the total content of the CNTs and the particulate conductive material is not more than any of the upper limits set forth above, flexibility of a positive electrode mixed material layer can be further improved.

### <Dispersion medium>

The presently disclosed slurry composition normally contains a dispersion medium such as water.

A solvent such as water that was contained in a binder composition used to produce the slurry composition can, for example, be used as at least a portion of the dispersion medium of the presently disclosed slurry composition.

### <Other components>

Besides the polymer X, the particulate polymer Y, the conductive material, and the dispersion medium described above, the presently disclosed slurry composition may further contain any other components such as reinforcing materials, leveling agents, viscosity modifiers, and additives for electrolyte solution. Known components can be used as these other components without any specific limitations so long as they do not affect battery reactions. Moreover, one of these components may be used individually, or two or more of these components may be used in combination in a freely selected ratio.

### <Production method of slurry composition>

The presently disclosed slurry composition can be produced by dispersing or dissolving the above-described components in the dispersion medium, for example, without any specific limitations. Specifically, the slurry composition can be produced by mixing the above-described components and the dispersion medium using a mixer such as a ball mill, a sand mill, a bead mill, a pigment disperser, a grinding machine, an ultrasonic disperser, a homogenizer, a planetary mixer, or a FILMIX.

Although water is typically used as the dispersion medium, an aqueous solution of any compound or a mixed solution of water and a small amount of an organic medium may alternatively be used.

Moreover, in a case in which a conductive material such as the previously described CNTs and particulate conductive material is used in production of the presently disclosed slurry composition, for example, the conductive material such as the CNTs and the particulate conductive material can be dispersed in a dispersion medium such as water in advance to produce a dispersion liquid, and then the obtained dispersion liquid can be mixed with other components such as the electrode active material, the polymer X, and the particulate polymer Y.

### (Positive electrode for non-aqueous secondary battery)

The presently disclosed positive electrode includes a positive electrode mixed material layer that has been formed using the presently disclosed slurry composition set forth above and normally has a structure in which the positive electrode mixed material layer has been formed on a current collector. Consequently, the positive electrode mixed material layer contains at least the carbon coating layer-covered olivine-type LFP particles as a positive electrode active material and the polymer X, and optionally further contains the particulate polymer Y, the conductive material, and so forth.

Components such as the carbon coating layer-covered olivine-type LFP particles, the polymer X, the particulate polymer Y, and the conductive material that are contained in the positive electrode mixed material layer are components that were contained in the slurry composition set forth above, and the preferred proportional content of each component is the same as the preferred proportional content of each component when all solid content contained in the slurry composition is taken to be 100 mass%.

Moreover, the preferred proportion constituted by the content of CNTs among the total content of CNTs and a particulate conductive material that can be contained in the positive electrode mixed material layer is also the same as the preferred proportion constituted by the content of CNTs among the total content of CNTs and a particulate conductive material that can be contained in the slurry composition set forth above.

Note that the presently disclosed positive electrode may further include a conductive adhesive layer containing at least a conductive material and an adhesive between the current collector and the positive electrode mixed material layer.

The positive electrode mixed material layer that is included in the presently disclosed electrode can display excellent adhesiveness and water shedding ability as a result of being formed using the presently disclosed slurry composition.

Moreover, the positive electrode mixed material layer that is included in the presently disclosed positive electrode has a uniform structure as a result of being formed using the presently disclosed slurry composition having excellent dispersibility. Therefore, the presently disclosed positive electrode can reduce internal resistance of a secondary battery as a result of the presently disclosed positive electrode including a positive electrode mixed material layer that has a uniform structure and that also has excellent water shedding ability.

### <Current collector>

A material having electrical conductivity and electrochemical durability is used as the current collector. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio.

In a case in which an electrode that further includes the aforementioned conductive adhesive layer between the electrode mixed material layer and the current collector is to be produced, for example, a conductive adhesive layer-equipped current collector that is obtained by forming a conductive adhesive layer on a current collector substrate can be used as the current collector.

A current collector formed of a metal material such as previously described, for example, can be used as the current collector substrate.

No specific limitations are placed on the method by which the conductive adhesive layer is formed on the current collector substrate. For example, the conductive adhesive layer can be formed through application and subsequent drying on the current collector substrate of a slurry composition (also referred to as a "conductive adhesive") having at least a conductive material and an adhesive dispersed or dissolved in a dispersion medium or solvent such as water, and optionally further having a dispersant dispersed or dissolved therein.

The conductive material is not specifically limited, and any of the conductive materials that can be contained in the slurry composition set forth above can be used, for example. Moreover, the adhesive is not specifically limited, and the particulate polymer Y that can be contained in the slurry composition set forth above can be used. Furthermore, the dispersant is not specifically limited, and a known dispersant such as carboxymethyl cellulose or a salt thereof can be used, for example.

Known methods can be adopted without any specific limitations as the method by which the conductive adhesive is applied onto the current collector substrate and the method by which the applied conductive adhesive is dried.

### <Positive electrode mixed material layer>

The positive electrode mixed material layer may be formed through a step of applying the slurry composition onto the current collector (application step) and a step of drying the slurry composition that has been applied onto the current collector (drying step), for example.

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry composition coating on the current collector after application but before drying can be set as appropriate in accordance with the thickness of the positive electrode mixed material layer to be obtained after drying.

### <<Drying step>>

The slurry composition that has been applied onto the current collector can be dried by any commonly known method without any specific limitations. Examples of drying methods that can be used include drying by warm, hot, or low-humidity air; drying in a vacuum; and drying by irradiation with infrared light, an electron beam, or the like. By drying the slurry composition that has been applied onto the current collector in this manner, it is possible to form a positive electrode mixed material layer on the current collector and thereby obtain an electrode including the current collector and the positive electrode mixed material layer.

After the drying step, the electrode mixed material layer may be further subjected to a pressing process, such as mold pressing or roll pressing. This pressing process can improve peel strength of the electrode.

### (Non-aqueous secondary battery)

The presently disclosed secondary battery includes the presently disclosed positive electrode set forth above. For example, the presently disclosed secondary battery may include the presently disclosed positive electrode set forth above, a negative electrode, a separator, and an electrolyte solution.

Moreover, the presently disclosed secondary battery has reduced internal resistance as a result of including the presently disclosed positive electrode set forth above.

Although the following describes, as one example, a case in which the non-aqueous secondary battery is a lithium ion secondary battery, the presently disclosed non-aqueous secondary battery is not limited to the following example.

### <Negative electrode>

A known negative electrode can be used as the negative electrode without any specific limitations.

### <Separator>

The separator may be a microporous membrane formed using a polyolefinic (polyethylene, polypropylene, polybutene, or polyvinyl chloride) resin, a microporous membrane formed using a resin such as polyethylene terephthalate, polycycloolefin, polyether sulfone, polyamide, polyimide, polyamide-imide, polyaramid, polycycloolefin, nylon, or polytetrafluoroethylene, a woven fabric or non-woven fabric formed using polyolefinic fibers, an assembly of particles formed of an electrically insulating substance, or the like, for example, without any specific limitations. Of these separators, a microporous membrane formed using polyolefinic (polyethylene, polypropylene, polybutene, or polyvinyl chloride) resin is preferable because this can reduce the total thickness of the separator, which can thereby increase the ratio of electrode mixed material layer in the secondary battery and increase the volumetric capacity of the secondary battery.

### <Electrolyte solution>

The electrolyte solution may be formed by dissolving an electrolyte in a solvent.

The solvent may be an organic solvent that can dissolve an electrolyte. Specific examples of solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Moreover, known additives such as vinylene carbonate (VC), fluoroethylene carbonate (FEC), and ethyl methyl sulfone, for example, may be added to the solvent.

A lithium salt can be used as the electrolyte. For example, any of the compounds described in JP2012-204303A can be used as the lithium salt. Of these lithium salts, LiPF₆, LiClO₄, and CF₃SO₃Li are preferred as electrolytes because they readily dissolve in organic solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The presently disclosed secondary battery can be produced using a known assembly method without any specific limitations. Specifically, the presently disclosed secondary battery can be produced by, for example, performing rolling, folding, or the like of the presently disclosed positive electrode, the negative electrode, and the separator described above into the battery shape, as necessary, to place the positive electrode, negative electrode, and separator inside a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; a lead plate; or the like may be provided as necessary. The shape of the secondary battery may be a coin type, button type, sheet type, cylinder type, prismatic type, flat type, or the like, for example.

Battery members such as the positive electrode, the negative electrode, and the separator that are included in the secondary battery are typically arranged such that the positive electrode is in contact with one side of the separator and the negative electrode is in contact with the other side of the separator. More specifically, the battery members are arranged such that a positive electrode mixed material layer is in contact with one side of the separator and a negative electrode mixed material layer is in contact with the other side of the separator.

### EXAMPLES

The following provides a more specific description of the present disclosure based on examples. However, the present disclosure is not limited to these examples. In the following description, "%" and "parts" used in expressing quantities are by mass, unless otherwise specified.

Note that in the case of a polymer that is obtained through polymerization of a plurality of types of monomers, the proportional content in the polymer of a monomer unit that is formed through polymerization of a given monomer is normally, unless otherwise specified, the same as the ratio (charging ratio) of the given monomer among all monomers used in polymerization of the polymer.

Various measurements and evaluations were performed according to the following methods.

### <Weak acid group content of surfaces of carbon coating layer-covered olivine-type LFP particles>

### <<Quantification of total content of strong acid groups, moderate acid groups, and weak acid groups>>

A sample of 3 g of carbon coating layer-covered olivine-type LFP particles was weighed into a vessel, 30 mL of a methyl isobutyl ketone (MIBK) solution of 0.01 M tetrabutylammonium hydroxide was added thereto, and the vessel was sealed. The vessel was placed inside an ultrasonic washer and was subjected to 1 hour of ultrasonic dispersing treatment while adjusting the tank temperature to 35°C or lower. The resultant dispersion liquid was processed in a centrifuge, and the resultant supernatant was filtered using a syringe filter. A portion of the resultant filtrate was sampled and was titrated (back titrated) with 0.01 M perchloric acid standard solution. The amount of acid A1 was calculated from the difference between the determined titer and a titer in a blank test in which the same operations were performed with the exception that a sample of carbon coating layer-covered olivine-type LFP particles was not loaded into the vessel. The amount of acid A1 corresponds to the total content of strong acid groups, moderate acid groups, and weak acid groups that are included at surfaces of the carbon coating layer-covered olivine-type LFP particles.

### <<Quantification of total content of strong acid groups and moderate acid groups>>

A sample of 3 g of carbon coating layer-covered olivine-type LFP particles was weighed into a vessel, 30 mL of an MIBK solution of 0.01 M tetraethylamine was added thereto, and the vessel was sealed. The vessel was placed inside an ultrasonic washer and was subjected to 1 hour of ultrasonic dispersing treatment while adjusting the tank temperature to 35°C or lower. The resultant dispersion liquid was processed in a centrifuge, and the resultant supernatant was filtered using a syringe filter. A portion of the resultant filtrate was sampled and was titrated (back titrated) with 0.01 M perchloric acid standard solution. The amount of acid A2 was calculated from the difference between the determined titer and a titer in a blank test in which the same operations were performed with the exception that a sample of carbon coating layer-covered olivine-type LFP particles was not loaded into the vessel. The amount of acid A2 corresponds to the total content of strong acid groups and moderate acid groups that are included at surfaces of the carbon coating layer-covered olivine-type LFP particles.

### <<Calculation of weak acid group content>>

The weak acid group content of surfaces of the carbon coating layer-covered olivine-type LFP particles was determined by subtracting the amount of acid A2 from the amount of acid A1.

### <G/D ratio of carbon coating layer>

The G/D ratio of a carbon coating layer of carbon coating layer-covered olivine-type lithium iron phosphate particles was calculated by, in microscopic laser Raman spectroscopy, determining a ratio of the peak intensity of a G band originating from a graphite structure that is detected at around 1600 cm⁻¹ and the peak intensity of a D band originating from crystal defects that is detected at around 1350 cm⁻¹. Note that measurement conditions in the microscopic laser Raman spectroscopy were as follows.

### <<Measurement conditions>>

Excitation wavelength: 532 nm
Grating: 600 gr/mm
Objective lens: ×20 magnification, numerical aperture (N.A.) 0.45
Wavenumber range: 500 cm⁻¹ to 2850 cm⁻¹
Used apparatus: RAMAN-11 (produced by Nanophoton Corp.)

### <Weight-average molecular weight and molecular weight distribution>

The weight-average molecular weight (Mw) and number-average molecular weight (Mn) of an obtained polymer X were measured by gel permeation chromatography (GPC), and then the molecular weight distribution (Mw/Mn) was calculated.

Note that production of an eluent (0.1 M Tris buffer solution (pH 9, 0.1 M KCl) was performed as follows.
1) 0.8 L of ultrapure water was prepared, and 12.11 g of tris(hydroxymethyl)aminomethane and 7.46 g of potassium chloride were dissolved therein.
2) 0.1 M hydrochloric acid was added dropwise to adjust the pH to 9.
3) The volume of liquid was made up to 1 L with ultrapure water in a volumetric flask after pH adjustment.

Sample preparation was performed as follows.

First, the polymer X was added to 5 mL of the eluent such as to give a solid content concentration of 0.05 wt%, and then, at 25°C, a stirring bar was placed therein and 30 minutes of stirring was performed at 300 rpm using a magnetic stirrer. A filtrate obtained through filtration of the obtained solution using a 0.45 µm membrane filter was taken as a measurement sample.

The GPC measurement conditions were as follows.
Apparatus: Agilent 1260 Infinity II HPLC (Agilent Technologies, Inc.)
Column: TSKgel GMPWXL 13 µm 300 mm × 7.8 mm
Eluent: 0.1 M Tris buffer solution (pH 9, 0.1 M KCl)
Flow rate: 0.7 mL/min
Detector: 1260 Infinity II RI detector (Agilent Technologies, Inc.)
Column temperature: 40°C
Injection volume: 200 µL
Molecular weight standard: Standard polyethylene oxide (PEO)
Sample concentration: 0.05 wt% (solid content concentration)

### <Dispersibility of slurry composition>

The viscosity of a slurry composition for a positive electrode was measured in accordance with JIS Z8803:1991 under conditions of a rotation speed of 60 rpm and a temperature of 25°C using a single-cylinder rotational viscometer (Brookfield B-type viscometer) and was confirmed to be within a range of 2,500 mPa·s to 3,500 mPa·s. Dispersibility of the slurry composition for a positive electrode was then evaluated in accordance with the following standard based on the value of the solid content concentration of the slurry composition for a positive electrode having a viscosity in the aforementioned range. Note that a larger value for solid content concentration in the same viscosity range (2,500 mPa·s to 3,500 mPa·s) for the same type of slurry composition indicates that solid content contained in the slurry composition is better dispersed, and thus indicates that the slurry composition has better dispersibility.
A: Solid content concentration of 50% or more
B: Solid content concentration of not less than 45% and less than 50%
C: Solid content concentration of not less than 40% and less than 45%
D: Solid content concentration of less than 40% or not dispersed (no fluidity)

### <Adhesiveness of positive electrode mixed material layer>

A positive electrode for a lithium ion secondary battery was cut out as a rectangular shape of 1.0 cm in width by 10 cm in length to obtain a test specimen. Cellophane tape (tape prescribed by JIS Z1522) was affixed to the surface at the positive electrode mixed material layer-side of the test specimen, and then the stress when the cellophane tape was pulled and peeled off in a direction at 90° and at a speed of 50 mm/min from one end of the test specimen was measured. A total of three measurements were made in this manner. An average value of the measurements was determined, was taken to be the peel strength (N/m), and was evaluated by the following standard. A larger peel strength indicates that the positive electrode mixed material layer has better adhesiveness and is closely adhered more strongly to the current collector.
A: Peel strength of 20 N/m or more
B: Peel strength of not less than 15 N/m and less than 20 N/m
C: Peel strength of not less than 10 N/m and less than 15 N/m
D: Peel strength of less than 10 N/m

### <Water shedding ability of positive electrode mixed material layer>

A positive electrode for a lithium ion secondary battery was vacuum dried at 120°C for 10 hours and was subsequently left at a temperature of 25°C, a dew point of -60°C, and a humidity of 0.05% for 10 minutes. Thereafter, a positive electrode mixed material layer of the positive electrode for a lithium ion secondary battery was weighed out such as to have a weight of 0.1 g to 0.2 g, and the water content thereof was measured by the Karl Fischer method using a coulometric titration water meter (produced by Mitsubishi Chemical Analytech Co., Ltd.). AQUAMICRON AX was used as an anolyte, AQUAMICRON CXU was used as a catholyte, and the vaporization temperature was set as 170°C. Note that water content measurement was repeated three times, and an average value of the determined values was taken as a measured value. The measured value of the water content was used to evaluate water shedding ability of the positive electrode mixed material layer in accordance with the following standard. Note that a smaller measured value for water content indicates that the positive electrode mixed material layer has better water shedding ability.
A: 500 ppm or less
B: Not less than 500 ppm and less than 600 ppm
C: Not less than 600 ppm and less than 700 ppm
D: 700 ppm or more

### <Internal resistance>

A lithium ion secondary battery was charged to an SOC (State Of Charge) of 50% at 1C (C is a value expressed by rated capacity (mA)/1 hour (h)) in a 25°C atmosphere. Thereafter, the lithium ion secondary battery was subjected to 20 seconds of charging and 20 seconds of discharging centered on the SOC of 50% at each of 0.2C, 0.5C, 1.0C, 2.0C, and 3.0C in a 25°C environment. The battery voltage after 20 seconds in each case (charging side and discharging side) was plotted against the current value, and the gradient of this plot was determined as the IV resistance (Ω) (IV resistance during charging and IV resistance during discharging). The obtained IV resistance value (Ω) was evaluated by the following standard. A smaller value for the IV resistance indicates that the lithium ion secondary battery has less internal resistance.
A: IV resistance of less than 10 Ω
B: IV resistance of not less than 10 Ω and less than 15 Ω
C: IV resistance of not less than 15 Ω and less than 20 Ω
D: IV resistance of 25 Ω or more

### (Production Example 1)

A carbon coating layer was formed with respect to surfaces of olivine-type LFP particles using a solid phase method to obtain carbon coating layer-covered olivine-type LFP particles A.

The weak acid group content of surfaces of the obtained carbon coating layer-covered olivine-type LFP particles A was 10 µmol/g, and the G/D ratio of the carbon coating layer of the carbon coating layer-covered olivine-type LFP particles A was 0.69. Moreover, the average particle diameter of the carbon coating layer-covered olivine-type LFP particles A was 1 µm.

### (Production Example 2)

The carbon coating layer-covered olivine-type LFP particles A obtained in Production Example 1 were subjected to firing at 400°C in an oxygen (O₂) atmosphere to obtain carbon coating layer-covered olivine-type LFP particles B.

The weak acid group content of surfaces of the obtained carbon coating layer-covered olivine-type LFP particles B was 13.5 µmol/g, and the G/D ratio of the carbon coating layer of the carbon coating layer-covered olivine-type LFP particles B was 0.676. Moreover, the average particle diameter of the carbon coating layer-covered olivine-type LFP particles B was 1 µm.

### (Production Example 3)

The carbon coating layer-covered olivine-type LFP particles A obtained in Production Example 1 were subjected to firing at 700°C in a nitrogen (N₂) atmosphere to obtain carbon coating layer-covered olivine-type LFP particles C.

The weak acid group content of surfaces of the obtained carbon coating layer-covered olivine-type LFP particles C was 5 µmol/g, and the G/D ratio of the carbon coating layer of the carbon coating layer-covered olivine-type LFP particles C was 0.741. Moreover, the average particle diameter of the carbon coating layer-covered olivine-type LFP particles C was 1 µm.

### (Comparative Production Example 1)

The carbon coating layer-covered olivine-type LFP particles A obtained in Production Example 1 were subjected to firing at 700°C in a nitrogen (N₂) atmosphere to obtain carbon coating layer-covered olivine-type LFP particles D. Note that the firing in a nitrogen atmosphere was performed for a longer time than the firing in a nitrogen atmosphere in the previously described Production Example 3.

The weak acid group content of surfaces of the obtained carbon coating layer-covered olivine-type LFP particles D was 4.5 µmol/g, and the G/D ratio of the carbon coating layer of the carbon coating layer-covered olivine-type LFP particles D was 0.752. Moreover, the average particle diameter of the carbon coating layer-covered olivine-type LFP particles D was 1 µm.

### (Comparative Production Example 2)

The carbon coating layer-covered olivine-type LFP particles A obtained in Production Example 1 were subjected to firing at 400°C in an oxygen (O₂) atmosphere to obtain carbon coating layer-covered olivine-type LFP particles E. Note that the firing in an oxygen atmosphere was performed for a longer time than the firing in an oxygen atmosphere in the previously described Production Example 2.

The weak acid group content of surfaces of the obtained carbon coating layer-covered olivine-type LFP particles E was 17 µmol/g, and the G/D ratio of the carbon coating layer of the carbon coating layer-covered olivine-type LFP particles E was 0.6667. Moreover, the average particle diameter of the carbon coating layer-covered olivine-type LFP particles E was 1 µm.

### (Example 1)

### <Production of aqueous solution of polymer X>

A 10 L septum-equipped flask was charged with 770 parts of deionized water. The deionized water was heated to 40°C, and the inside of the flask was purged with nitrogen gas at a flow rate of 100 mL/min. Next, 8 parts of acrylic acid as an ethylenically unsaturated carboxylic acid monomer, 17 parts of 2-hydroxyethyl methacrylate (HEMA) as a hydroxy group-containing methacrylic acid ester monomer, and 75 parts of 2-hydroxyethyl acrylate (β-HEA) as a hydroxy group-containing acrylic acid ester monomer were mixed and were injected into the flask using a syringe. Thereafter, 3 parts of a 10.0% aqueous solution of sodium L-ascorbate as a polymerization accelerator was loaded using a syringe, and 10 minutes later, 38 parts of a 4.0% aqueous solution of potassium persulfate as a polymerization initiator was supplemented into the flask using a syringe. After 1 hour from the start of the reaction, the temperature was raised to 55°C, and the polymerization reaction was caused to proceed. After 2 hours, 0.5 parts of a 10.0% aqueous solution of sodium hydrogen sulfite as a polymerization accelerator was loaded using a syringe, and 10 minutes later, 5 parts of a 4.0% aqueous solution of potassium persulfate as a polymerization initiator was supplemented into the flask using a syringe. After 3 hours, 0.5 parts of a 10.0% aqueous solution of sodium hydrogen sulfite as a polymerization accelerator was loaded using a syringe, and 10 minutes later, 5 parts of a 4.0% aqueous solution of potassium persulfate as a polymerization initiator was supplemented into the flask using a syringe. After 4 hours, 0.5 parts of a 10.0% aqueous solution of sodium hydrogen sulfite as a polymerization accelerator was loaded using a syringe, and 10 minutes later, 5 parts of a 4.0% aqueous solution of potassium persulfate as a polymerization initiator was supplemented into the flask using a syringe. After 5 hours, 0.5 parts of a 10.0% aqueous solution of sodium hydrogen sulfite as a polymerization accelerator was loaded using a syringe, and 10 minutes later, 5 parts of a 4.0% aqueous solution of potassium persulfate as a polymerization initiator was supplemented into the flask using a syringe. After 6 hours, a reaction inhibitor was added, and the flask was opened to air to end the polymerization reaction. Thereafter, the product was adjusted to pH 8 using an 8% aqueous solution of lithium hydroxide to yield an aqueous solution of a polymer X.

Note that the polymerization conversion rate of monomers in the polymerization reaction was approximately 100% and that the chemical composition (proportional content of each monomer unit) in the obtained polymer X was the same as the ratio (charging ratio) of each monomer among all monomers used in polymerization of the polymer X. Also note that the obtained polymer X was water-soluble according to the definition in the present specification.

### <Production of particulate polymer Y>

A hydrophilic group-containing acrylic polymer was produced as a particulate polymer Y as described below.

A 1 L septum-equipped flask (reactor) including a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 76 parts of 2-ethylhexyl acrylate as a (meth)acrylic acid ester monomer, 2.0 parts of itaconic acid as a carboxy group-containing monomer, 1.0 parts of 2-hydroxyethyl acrylate (β-HEA) as a hydroxy group-containing monomer, and 21 parts of acrylonitrile as a nitrile group-containing monomer. The monomer composition was continuously added into the 1 L septum-equipped flask over 3 hours to perform polymerization. The reaction was carried out at 60°C during the addition. Once the addition was complete, a further 2 hours of stirring was performed at 80°C.

A water dispersion containing a polymer that was obtained in this manner was adjusted to pH 8 through addition of 5% sodium hydroxide aqueous solution to yield a water dispersion of a particulate polymer Y (hydrophilic group-containing acrylic polymer).

### <Production of CNT dispersion liquid>

A CNT dispersion liquid having a solid content concentration of 1 mass% was produced by using a disper blade to stir (3,000 rpm, 10 minutes) 0.4 parts of carbon nanotubes (BET specific surface area: 250 m²/g) as a conductive material, 0.6 parts (in terms of solid content) of carboxymethyl cellulose (Daicel 1220 produced by Daicel Corporation), and 99 parts of deionized water and subsequently using a bead mill in which zirconia beads of 1 mm in diameter were used to perform 1 hour of mixing at a circumferential speed of 8 m/s.

### <Production of acetylene black dispersion liquid>

An acetylene black dispersion liquid having a solid content concentration of 5 mass% was produced by using a disper blade to stir (3,000 rpm, 60 minutes) 4.4 parts of acetylene black as a conductive material, 0.6 parts (in terms of solid content) of carboxymethyl cellulose (Daicel 1220 produced by Daicel Corporation), and 95 parts of deionized water.

### <Production of slurry composition for positive electrode>

After adding together 100 parts of the carbon coating layer-covered olivine-type LFP particles A (surface weak acid group content: 10 µmol/g; G/D ratio of carbon coating layer: 0.69; average particle diameter: 1 µm) as a positive electrode active material, 1.2 parts (in terms of solid content) of the aqueous solution of the polymer X, and deionized water and adjusting these materials to a solid content concentration of 78%, these materials were mixed (60 rpm, 50 minutes) in a planetary mixer.

Next, the acetylene black dispersion liquid was added such that the additive amount of acetylene black was 1.9 parts and was mixed (60 rpm, 10 minutes) in the planetary mixer. Next, the CNT dispersion liquid was added such that the additive amount of carbon nanotubes was 0.1 parts and was mixed (60 rpm, 10 minutes) in the planetary mixer. Finally, 1.8 parts (in terms of solid content) of the water dispersion of the particulate polymer Y was added and was mixed (40 rpm, 10 minutes) in the planetary mixer to produce a slurry composition for a positive electrode. Note that in production of the slurry composition for a positive electrode, water was added in order to adjust the viscosity of the obtained slurry composition for a positive electrode (measured by single-cylinder rotational viscometer (Brookfield B-type viscometer) in accordance with JIS Z8803:1991; temperature: 25°C; rotation speed: 60 rpm) to within a range of 2,500 mPa·s to 3,500 mPa·s.

Dispersibility of the obtained slurry composition for a positive electrode was evaluated. The result is shown in Table 1.

### <Production of conductive adhesive layer-equipped current collector>

A conductive adhesive layer-equipped current collector produced by a method described below was used as a current collector in production of a positive electrode.

After adding together 70 parts of conductive carbon (graphite/acetylene black = 70/30 (mass ratio)) and 8 parts of carboxymethyl cellulose (Daicel 1220 produced by Daicel Corporation) as a dispersant and using a disper blade to perform 60 minutes of stirring thereof at 3,000 rpm, 22 parts in terms of solid content of the water dispersion of the particulate polymer Y was added, and a further 10 minutes of stirring at 1,500 rpm was performed using the disper blade to produce a conductive adhesive.

The conductive adhesive was applied onto aluminum foil serving as a current collector substrate by casting using a roll bar with a forming speed of 20 m/min and was dried at 80°C to form a conductive adhesive layer of 1 µm in thickness. In this manner, a conductive adhesive layer-equipped current collector having a conductive adhesive layer formed on a current collector substrate was obtained.

### <Production of positive electrode for lithium ion secondary battery>

The slurry composition for a positive electrode obtained as described above was applied onto a surface at the conductive adhesive layer-side of the conductive adhesive layer-equipped current collector by a comma coater such as to have a coating weight after drying of 22 mg/cm², was dried at 90°C for 20 minutes and at 120°C for 20 minutes, and was subsequently heat treated at 60°C for 10 hours to obtain a positive electrode web. The positive electrode web was rolled by roll pressing to produce a sheet-shaped positive electrode formed of aluminum foil, a conductive adhesive layer, and a positive electrode mixed material layer of 2.5 g/cm³ in density. The sheet-shaped positive electrode was cut to 48.0 mm in width and 47 cm in length to obtain a positive electrode for a lithium ion secondary battery.

The obtained positive electrode for a lithium ion secondary battery was used to evaluate adhesiveness and water shedding ability of the positive electrode mixed material layer. The results are shown in Table 1.

### <Production of negative electrode for lithium ion secondary battery>

A 5 MPa pressure-resistant vessel equipped with a stirrer was charged with 65 parts of styrene as an aromatic vinyl monomer, 35 parts of 1,3-butadiene as an aliphatic conjugated diene monomer, 2 parts of itaconic acid as an ethylenically unsaturated carboxylic acid monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. A water dispersion containing a polymer that was obtained in this manner was adjusted to pH 8 through addition of 5% sodium hydroxide aqueous solution. Unreacted monomer was subsequently removed by thermal-vacuum distillation. Thereafter, the water dispersion was cooled to 30°C or lower to yield a water dispersion of a particulate polymer as a binder for a negative electrode.

A planetary mixer was charged with 48.75 parts of artificial graphite and 48.75 parts of natural graphite as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion of the particulate polymer as a binder for a negative electrode that was obtained as described above was added and was kneaded at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 10 ± 0.5 mg/cm². The copper foil with the slurry composition for a negative electrode applied thereon was subsequently conveyed inside an oven having a temperature of 80°C for 2 minutes and an oven having a temperature of 110°C for 2 minutes at a speed of 400 mm/min so as to dry the slurry composition for a negative electrode on the copper foil and obtain a negative electrode web having a negative electrode mixed material layer formed on the current collector.

This negative electrode web was rolled by roll pressing to produce a sheet-shaped negative electrode formed of copper foil and a negative electrode mixed material layer of 1.6 g/cm³ in density. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up with the respective electrode mixed material layers thereof facing each other and with a separator (microporous membrane made of polyethylene) of 15 µm in thickness interposed therebetween using a core of 20 mm in diameter to obtain a roll. The obtained roll was compressed to a thickness of 4.5 mm from one direction at a speed of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

The compressed roll was subsequently housed inside a laminate case made of aluminum together with 3.2 g of the electrolyte solution. After connecting a nickel lead to a specific position on the negative electrode for a secondary battery and connecting an aluminum lead to a specific position on the positive electrode for a secondary battery, an opening of the case was thermally sealed to obtain a lithium ion secondary battery. This lithium ion secondary battery had a pouch shape of 35 mm in width, 60 mm in height, and 5 mm in thickness, and the nominal capacity of the battery was 700 mAh.

The internal resistance of the obtained lithium ion secondary battery was evaluated. The result is shown in Table 1.

### (Example 2)

Production of an aqueous solution of a polymer X, production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that production of the particulate polymer Y was performed as described below. The results are shown in Table 1.

### <Production of particulate polymer Y>

A hydrophilic group-containing styrene-butadiene copolymer (hydrophilic group-containing SBR) was produced as a particulate polymer Y as described below.

A 5 MPa pressure-resistant vessel equipped with a stirrer was charged with 63 parts of styrene as an aromatic vinyl monomer, 34 parts of 1,3-butadiene as a conjugated diene monomer, 2 parts of itaconic acid as a carboxy group-containing monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. A water dispersion containing a polymer that was obtained in this manner was adjusted to pH 8 through addition of 5% sodium hydroxide aqueous solution. Unreacted monomer was subsequently removed through thermal-vacuum distillation. Thereafter, the water dispersion was cooled to 30°C or lower to yield a water dispersion of hydrophilic group-containing SBR as a particulate polymer.

### (Examples 3, 4, 7, and 8 and Comparative Examples 3 and 4)

Production of an aqueous solution of a polymer X, production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that in production of the aqueous solution of the polymer X, the types and/or amounts of added monomers were changed such that the chemical composition (proportional content of each monomer unit) in the obtained polymer X was as indicated in Tables 1 and 2. The results are shown in Tables 1 and 2.

### (Example 5)

Production of an aqueous solution of a polymer X, production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that in production of the slurry composition for a positive electrode, the carbon coating layer-covered olivine-type LFP particles B (surface weak acid group content: 13.5 µmol/g; G/D ratio of carbon coating layer: 0.676; average particle diameter: 1 µm) were used instead of the carbon coating layer-covered olivine-type LFP particles A (surface weak acid group content: 10 µmol/g; G/D ratio of carbon coating layer: 0.69; average particle diameter: 1 µm). The results are shown in Table 1.

### (Example 6)

Production of an aqueous solution of a polymer X, production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that in production of the slurry composition for a positive electrode, the carbon coating layer-covered olivine-type LFP particles C (surface weak acid group content: 5 µmol/g; G/D ratio of carbon coating layer: 0.741; average particle diameter: 1 µm) were used instead of the carbon coating layer-covered olivine-type LFP particles A (surface weak acid group content: 10 µmol/g; G/D ratio of carbon coating layer: 0.69; average particle diameter: 1 µm). The results are shown in Table 1.

### (Example 9)

Production of an aqueous solution of a polymer X, production of a particulate polymer Y, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that in production of the slurry composition for a positive electrode, a CNT dispersion liquid was not used and the additive amount of the acetylene black dispersion liquid was changed such that the additive amount of acetylene black changed from 1.9 parts to 3.0 parts. The results are shown in Table 2.

### (Example 10)

Production of an aqueous solution of a polymer X, production of a particulate polymer Y, production of a CNT dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that in production of the slurry composition for a positive electrode, an acetylene black dispersion liquid (amount equivalent to 1.9 parts of acetylene black) was not added and the additive amount of the CNT dispersion liquid was changed such that the additive amount of carbon nanotubes changed from 0.1 parts to 0.5 parts. The results are shown in Table 2.

### (Comparative Example 1)

Production of an aqueous solution of a polymer X, production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that in production of the slurry composition for a positive electrode, the carbon coating layer-covered olivine-type LFP particles D (surface weak acid group content: 4.5 µmol/g; G/D ratio of carbon coating layer: 0.6667; average particle diameter: 1 µm) were used instead of the carbon coating layer-covered olivine-type LFP particles A (surface weak acid group content: 10 µmol/g; G/D ratio of carbon coating layer: 0.69; average particle diameter: 1 µm). The results are shown in Table 2.

### (Comparative Example 2)

Production of an aqueous solution of a polymer X, production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were performed, and various measurements and evaluations were carried out in the same way as in Example 1 with the exception that in production of the slurry composition for a positive electrode, the carbon coating layer-covered olivine-type LFP particles E (surface weak acid group content: 17 µmol/g; G/D ratio of carbon coating layer: 0.6667; average particle diameter: 1 µm) were used instead of the carbon coating layer-covered olivine-type LFP particles A (surface weak acid group content: 10 µmol/g; G/D ratio of carbon coating layer: 0.69; average particle diameter: 1 µm). The results are shown in Table 2.

In Tables 1 and 2, shown below:
"AA" indicates acrylic acid unit;
"NaSS" indicates sodium styrenesulfonate unit;
"β-HEA" indicates 2-hydroxyethyl acrylate unit;
"HEMA" indicates 2-hydroxyethyl methacrylate unit;
"Aamid" indicates acrylamide unit;
"AN" indicates acrylonitrile unit;
"ACR" indicates hydrophilic group-containing acrylic polymer;
"SBR" indicates hydrophilic group-containing styrene-butadiene copolymer;
"CNT" indicates carbon nanotubes; and
"AcB" indicates acetylene black.

Moreover, the type "AN/Aamid" of other monomer units and the proportional content "5/10" thereof that are recorded in Table 1 for the polymer X of Example 4 indicate that the polymer X includes 5 mass% of acrylonitrile units and 10 mass% of acrylamide units.

**[Table 1]**

| | | | | Example 1 | Example 2 | Example 3 | Example 4 | Example 5 | Example 6 |
|---|---|---|---|---|---|---|---|---|---|
| | Carbon coating layer-covered olivine-type LFP particles | Type | | A | A | A | A | B | C |
| | | Surface weak acid group content [µmol/g] | | 10 | 10 | 10 | 10 | 13.5 | 5 |
| | | G/D ratio of carbon coating layer | | 0.690 | 0.690 | 0.690 | 0.690 | 0.676 | 0.741 |
| | Polymer X | Acidic group-containing monomer unit | Type | AA | AA | Nass | MAA | AA | AA |
| | | | Proportional content [mass%] | 8 | 8 | 15 | 25 | 8 | 8 |
| | | Hydroxy group-containing acrylic acid ester monomer unit | Type | β-HEA | β-HEA | β-HEA | β-HEA | β-HEA | β-HEA |
| Slurry composition for positive electrode | | | Proportional content [mass%] | 75 | 75 | 70 | 60 | 75 | 75 |
| | | Other monomer unit | Type | HEMA | HEMA | Aamid | AN/Aamid | HEMA | HEMA |
| | | | Proportional content [mass%] | 17 | 17 | 15 | *5*/*10* | 17 | 17 |
| | | Weight-average molecular weight (Mw) | | 150000 | 150000 | 250000 | 270000 | 150000 | 150000 |
| | | Molecular weight distribution (Mw/Mn) | | 3 | 3 | 2.5 | 3.5 | 3 | 3 |
| | Particulate polymer Y including hydrophilic group | Type | | ACR | SBR | ACR | ACR | ACR | ACR |
| | | Content (per 100 parts by mass of carbon coating layer-covered olivine-type LFP particles) [parts by mass] | | 1.8 | 1.8 | 1.8 | 1.8 | 1.8 | 1.8 |
| | Conductive material | Type | | CNT+ AcB | CNT+ AcB | CNT+ AcB | CNT+ AcB | CNT+ AcB | CNT+ AcB |
| Evaluations | Dispersibility of slurry composition for positive electrode | | | A | A | A | A | B | B |
| | Adhesiveness of positive electrode mixed material layer | | | A | A | A | A | A | B |
| | Water shedding ability of positive electrode mixed material layer | | | A | A | A | A | B | A |
| | Internal resistance of secondary battery | | | A | A | A | A | B | B |

**[Table 2]**

| | | | | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|
| | Carbon coating layer-covered olivine-type LFP particles | Type | | A | A | A | A | D | E | A | A |
| | | Surface weak acid group content [µmol/g] | | 10 | 10 | 10 | 10 | 4.5 | 17 | 10 | 10 |
| | | G/D ratio of carbon coating layer | | 0.690 | 0.690 | 0.690 | 0.690 | 0.752 | 0.6667 | 0.690 | 0.690 |
| | Polymer X | Acidic group-containing monomer unit | Type | AA | AA | AA | AA | AA | AA | AA | AA |
| | | | Proportional content [mass%] | 35 | 5 | 8 | 8 | 8 | 8 | 45 | 1 |
| | | Hydroxy group-containing acrylic acid ester monomer unit | Type | β-HEA | β-HEA | β-HEA | β-HEA | β-HEA | β-HEA | β-HEA | β-HEA |
| Slurry composition for positive electrode | | | Proportional content [mass%] | 60 | 75 | 75 | 75 | 75 | 75 | 55 | 75 |
| | | Other monomer unit | Type | HEMA | HEMA | HEMA | HEMA | HEMA | HEMA | - | HEMA |
| | | | Proportional content [mass%] | 5 | 20 | 17 | 17 | 17 | 17 | - | 24 |
| | | Weight-average molecular weight (Mw) | | 180000 | 120000 | 150000 | 150000 | 150000 | 150000 | 250000 | 250000 |
| | | Molecular weight distribution (Mw/Mn) | | 2.8 | 2.2 | 3 | 3 | 3 | 3 | 2.5 | 2.5 |
| | Particulate polymer Y including hydrophilic group | Type | | ACR | ACR | ACR | ACR | ACR | ACR | ACR | ACR |
| | | Content (per 100 parts by mass of carbon coating layer-covered olivine-type LFP particles) [parts by mass] | | 1.8 | 1.8 | 1.8 | 1.8 | 1.8 | 1.8 | 1.8 | 1.8 |
| | Conductive material | Type | | CNT+ AcB | CNT+ AcB | Only AcB | Only CNT | CNT+ AcB | CNT+ AcB | CNT+ AcB | CNT+ AcB |
| Evaluations | Dispersibility of slurry composition for positive electrode | | | A | B | A | A | D | D | C | D |
| | Adhesiveness of positive electrode mixed material layer | | | B | B | A | A | D | C | D | D |
| | Water shedding ability of positive electrode mixed material layer | | | A | B | A | A | D | D | D | D |
| | Internal resistance of secondary battery | | | B | B | A | A | D | D | D | D |

It can be seen from Tables 1 and 2 that with each of the slurry compositions for a non-aqueous secondary battery positive electrode of Examples 1 to 10, which each contain carbon coating layer-covered olivine-type LFP particles having a surface weak acid group content that is within a specific range and a polymer X having a proportional content of acidic group-containing monomer units that is within a specific range, the slurry composition has excellent dispersibility, and a positive electrode mixed material layer that is formed using the slurry composition can display excellent adhesiveness and water shedding ability.

In contrast, it can be seen that with the slurry composition for a non-aqueous secondary battery positive electrode of Comparative Example 1 in which carbon coating layer-covered olivine-type LFP particles having a surface weak acid group content that falls below a specific range are used, the slurry composition has poor dispersibility, and a positive electrode mixed material layer that is formed using the slurry composition has poor adhesiveness and water shedding ability.

It can also be seen that with the slurry composition for a non-aqueous secondary battery positive electrode of Comparative Example 2 in which carbon coating layer-covered olivine-type LFP particles having a surface weak acid group content that exceeds a specific range are used, the slurry composition has poor dispersibility, and a positive electrode mixed material layer that is formed using the slurry composition has poor adhesiveness and water shedding ability.

It can also be seen that with the slurry composition for a non-aqueous secondary battery positive electrode of Comparative Example 3 in which a polymer having a proportional content of acidic group-containing monomer units that exceeds a specific range is used, the slurry composition has poor dispersibility, and a positive electrode mixed material layer that is formed using the slurry composition has poor adhesiveness and water shedding ability.

It can also be seen that with the slurry composition for a non-aqueous secondary battery positive electrode of Comparative Example 4 in which a polymer having a proportional content of acidic group-containing monomer units that falls below a specific range is used, the slurry composition has poor dispersibility, and a positive electrode mixed material layer that is formed using the slurry composition has poor adhesiveness and water shedding ability.

### INDUSTRIAL APPLICABILITY

According to the present disclosure, it is possible to provide a slurry composition for a non-aqueous secondary battery positive electrode that has excellent dispersibility and that can cause a positive electrode mixed material layer to display excellent adhesiveness and water shedding ability.

Moreover, according to the present disclosure, it is possible to provide a positive electrode for a non-aqueous secondary battery including a positive electrode mixed material layer that can display excellent adhesiveness and water shedding ability.

Furthermore, according to the present disclosure, it is possible to provide a non-aqueous secondary battery that includes this positive electrode for a non-aqueous secondary battery.

## Claims

1. A slurry composition for a non-aqueous secondary battery positive electrode comprising:
carbon coating layer-covered olivine-type lithium iron phosphate particles in which surfaces of olivine-type lithium iron phosphate particles are at least partially covered by a carbon coating layer; and
a polymer X including an acidic group-containing monomer unit in a proportion of not less than 3 mass% and not more than 40 mass%, wherein
surfaces of the carbon coating layer-covered olivine-type lithium iron phosphate particles have a weak acid group content of not less than 5 µmol/g and not more than 15 µmol/g.

2. The slurry composition for a non-aqueous secondary battery positive electrode according to claim 1, wherein the carbon coating layer has a G/D ratio of not less than 0.4 and not more than 0.770.

3. The slurry composition for a non-aqueous secondary battery positive electrode according to claim 1, wherein the acidic group-containing monomer unit includes either or both of a carboxy group-containing monomer unit and a sulfo group-containing monomer unit.

4. The slurry composition for a non-aqueous secondary battery positive electrode according to claim 1, wherein the polymer X further includes a hydroxy group-containing acrylic acid ester monomer unit in a proportion of not less than 55 mass% and not more than 90 mass%.

5. The slurry composition for a non-aqueous secondary battery positive electrode according to claim 1, wherein the polymer X has a weight-average molecular weight of not less than 50,000 and less than 500,000.

6. The slurry composition for a non-aqueous secondary battery positive electrode according to claim 1, further comprising a particulate polymer Y including a hydrophilic group.

7. The slurry composition for a non-aqueous secondary battery positive electrode according to claim 6, wherein content of the particulate polymer Y is not less than 0.5 parts by mass and not more than 5 parts by mass relative to 100 parts by mass of the carbon coating layer-covered olivine-type lithium iron phosphate particles.

8. The slurry composition for a non-aqueous secondary battery positive electrode according to claim 1, further comprising a conductive material including either or both of carbon nanotubes and a particulate conductive material.

9. A positive electrode for a non-aqueous secondary battery comprising a positive electrode mixed material layer formed using the slurry composition for a non-aqueous secondary battery positive electrode according to any one of claims 1 to 8.

10. A non-aqueous secondary battery comprising the positive electrode for a non-aqueous secondary battery according to claim 9.
